# EUROPEAN PATENT APPLICATION

(11) **EP 3 483 800 A1**
(43) Date of publication of application: **15.05.2019**
(21) Application number: 18205516.0
(22) Date of filing: 09.11.2018
(51) Int. Cl.: G06Q 10/00, G06Q 10/06

(54) **METHODS AND APPARATUS TO GENERATE AN ASSET HEALTH QUANTIFIER OF A TURBINE ENGINE**

(30) Priority: 10.11.2017 US 201715809774
(71) Applicant: General Electric Company, Schenectady, NY 12345 (US)
(72) Inventor: ABERNATHY, Charles Larry, West Chester, OH Ohio 45069 (US); CHIARAMONTE, Gregory Jon, West Chester, OH Ohio 45069 (US); LEVIN, Steven Richard, West Chester, OH Ohio 45069 (US); HORN, Donald, West Chester, OH Ohio 45069 (US); UMANG, Nitish, Niskayuna, NY New York 12309 (US); SOIMAKALLIO, Asko, West Chester, OH Ohio 45069 (US); PEREZ ZARATE, Victor Manuel, Niskayuna, NY New York 12309 (US)
(74) Representative: Openshaw & Co.

(57) **Abstract**

Methods, apparatus 300, systems, and articles of manufacture 2400 are disclosed to generate an asset health quantifier of a turbine engine. An example apparatus 300 includes a health quantifier generator 410 to execute a computer-generated model 450, 452, 454, 456 to simulate an operating condition of a turbine engine 102 using asset monitoring information, generate an asset health quantifier of the turbine engine 102 based on the simulation, and compare the asset health quantifier to a threshold, and a removal scheduler 420 to identify the turbine engine 102 for removal from service based on the comparison to improve an operation of the turbine engine 102 by performing a workscope on the removed turbine engine 102.

## Description

### FIELD OF THE DISCLOSURE

This disclosure relates generally to turbine engines and, more particularly, to methods and apparatus to generate an asset health quantifier of a turbine engine.

### BACKGROUND

In recent years, turbine engines have been increasingly utilized in a variety of applications and fields. Turbine engines are intricate machines with extensive availability, reliability, and serviceability requirements. Traditionally, maintaining turbine engines incur steep costs. Costs generally include having exceptionally skilled and trained maintenance personnel service the turbine engines. In some instances, costs are driven by replacing expensive components or by repairing complex sub-assemblies.

The pursuit of increasing turbine engine availability while reducing premature maintenance costs requires enhanced insight. Such insight is needed to determine when to perform typical maintenance tasks at generally appropriate service intervals. Traditionally, availability, reliability, and serviceability increase as enhanced insight is deployed.

The market for long-term contractual agreements has grown at high rates over recent years for many service organizations. As the service organizations establish long-term contractual agreements with their customers, it becomes important to understand the expected scope of work (also referred to as "workscope") including product, service, and/or other project result. In addition, the service organizations need to have an understanding of the planning of repairs (e.g., shop workload and/or workscope planning) and how the maintenance of components will affect management of their service contracts including time, cost, risk, etc.

### BRIEF DESCRIPTION OF THE DRAWINGS

FIG. 1 illustrates an example gas turbine engine that can be utilized within an aircraft in which the examples disclosed herein can be implemented.
FIG. 2 is a block diagram of an example environment in which an example asset workscope generation system monitors the example gas turbine engine of FIG. 1.
FIG. 3 is a block diagram of an example implementation of the example asset workscope generation system of FIG. 2.
FIG. 4 is a block diagram of an example implementation of an example asset health calculator apparatus.
FIGS. 5-16 are flowcharts representative of example methods that can be executed by the example asset workscope generation system of FIGS. 2-3 and/or the example asset health calculator apparatus of FIGS. 3-4 to implement the examples disclosed herein.
FIG. 17 is a schematic illustration of performing an iterated local search to generate a removal schedule for assets corresponding to a single contract.
FIG. 18 illustrates example source code representative of example computer readable instructions that can be executed to implement the example asset health calculator of FIGS. 3-4 that can be used to implement the examples disclosed herein.
FIG. 19 is a schematic illustration of an example method of generating a removal schedule for assets corresponding to more than one contract
FIG. 20 illustrates example source code representative of example computer readable instructions that can be executed to implement the example asset health calculator of FIGS. 3-4 that can be used to implement the examples disclosed herein.
FIG. 21 is a schematic illustration of an example method of generating a removal schedule using single-level optimization.
FIG. 22 is a schematic illustration of an example method of generating a removal schedule using top-down optimization.
FIG. 23 is a schematic illustration of an example method of generating a removal schedule using bottom-up optimization.
FIG. 24 is a block diagram of an example processing platform structured to execute machine-readable instructions to implement the methods of FIGS. 5-16, 18, and 20 and/or the example asset health calculator apparatus of FIGS. 3-4.

The figures are not to scale. Wherever possible, the same reference numbers will be used throughout the drawing(s) and accompanying written description to refer to the same or like parts.

### BRIEF SUMMARY

Methods, apparatus, systems, and articles of manufacture to generate an asset health quantifier of a turbine engine are disclosed.

Certain examples provide an example apparatus for generating an asset health quantifier of a turbine engine. The example apparatus includes a health quantifier generator to execute a computer-generated model to generate an asset health quantifier of a turbine engine using asset monitoring information, compare the asset health quantifier to a threshold, and a removal scheduler to identify the turbine engine for removal from service based on the comparison to improve an operation of the turbine engine by performing a workscope on the removed turbine engine.

Certain examples provide an example method for generating an asset health quantifier of an asset. The example method includes executing a computer-generated model to generate an asset health quantifier of an asset using asset monitoring information, comparing the asset health quantifier to a threshold, and identifying the asset for removal from service based on the comparison to improve an operation of the asset by performing a workscope on the removed asset.

Certain examples provide an example non-transitory computer readable storage medium including instructions that, when executed, cause a machine to at least generate an asset health quantifier of an asset. The example instructions, when executed, cause the machine to at least execute a computer-generated model to generate an asset health quantifier of an asset using asset monitoring information, compare the asset health quantifier to a threshold, and identify the asset for removal from service based on the comparison to improve an operation of the asset by performing a workscope on the removed asset.

### DETAILED DESCRIPTION

In the following detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized. The following detailed description is therefore, provided to describe an exemplary implementation and not to be taken limiting on the scope of the subject matter described in this disclosure. Certain features from different aspects of the following description may be combined to form yet new aspects of the subject matter discussed below.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

As used herein, the terms "system," "unit," "module,", "engine,", "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hard-wired logic of the device. Various modules, units, engines, and/or systems shown in the attached figures may represent the hardware that operates based on software or hardwired instructions, the software that directs hardware to perform the operations, or a combination thereof.

A turbine engine, also called a combustion turbine or a gas turbine, is a type of internal combustion engine. Turbine engines are commonly utilized in aircraft and power-generation applications. As used herein, the terms "asset," "aircraft turbine engine," "gas turbine," "land-based turbine engine," and "turbine engine" are used interchangeably. A basic operation of the turbine engine includes an intake of fresh atmospheric air flow through the front of the turbine engine with a fan. In some examples, the air flow travels through an intermediate-pressure compressor or a booster compressor located between the fan and a high-pressure compressor. The booster compressor is used to supercharge or boost the pressure of the air flow prior to the air flow entering the high-pressure compressor. The air flow can then travel through the high-pressure compressor that further pressurizes the air flow. The high-pressure compressor includes a group of blades attached to a shaft. The blades spin at high speed and subsequently compress the air flow. The high-pressure compressor then feeds the pressurized air flow to a combustion chamber. In some examples, the high-pressure compressor feeds the pressurized air flow at speeds of hundreds of miles per hour. In some instances, the combustion chamber includes one or more rings of fuel injectors that inject a steady stream of fuel into the combustion chamber, where the fuel mixes with the pressurized air flow.

In the combustion chamber of the turbine engine, the fuel is ignited with an electric spark provided by an igniter, where the fuel in some examples burns at temperatures of more than 2000 degrees Fahrenheit. The resulting combustion produces a high-temperature, high-pressure gas stream (e.g., hot combustion gas) that passes through another group of blades called a turbine. A turbine includes an intricate array of alternating rotating and stationary airfoil-section blades. As the hot combustion gas passes through the turbine, the hot combustion gas expands, causing the rotating blades to spin. The rotating blades serve at least two purposes. A first purpose of the rotating blades is to drive the booster compressor and/or the high-pressure compressor to draw more pressured air into the combustion chamber. For example, the turbine is attached to the same shaft as the high-pressure compressor in a direct-drive configuration, thus, the spinning of the turbine causes the high-pressure compressor to spin. A second purpose of the rotating blades is to spin a generator operatively coupled to the turbine section to produce electricity. For example, the turbine can generate electricity to be used by an aircraft, a power station, etc.

In the example of an aircraft turbine engine, after passing through the turbine, the hot combustion gas exits the aircraft turbine engine through a nozzle at the back of the aircraft turbine engine. As the hot combustion gas exits the nozzle, the aircraft turbine engine and the corresponding aircraft coupled to the aircraft turbine engine are accelerated forward (e.g., thrusted forward). In the example of a land-based turbine engine, after passing through the turbine, the hot combustion gas is dissipated, used to generate steam, etc.

A turbine engine (e.g., an aircraft turbine engine) typically includes components (e.g., asset components, etc.) or modules (e.g., asset modules or assemblies including one or more components, etc.) for operation such as a fan (e.g., a fan section), a booster compressor, a high-pressure compressor, a high-pressure turbine, and a low-pressure turbine. The components can degrade over time due to demanding operating conditions such as extreme temperature and vibration. In some instances, debris or other objects enter the turbine engine via the fan and cause damage to one or more components. Routine maintenance intervals and service checks can be implemented to inspect for degradation and/or damage. However, in some instances, taking the turbine engine offline or off wing to perform maintenance includes taking an entire system, such as an aircraft, offline. In addition to prematurely replacing expensive components, aircraft non-operation can incur additional costs such as lost revenue, labor costs, etc. Monitoring components for degradation can provide actionable information for maintenance personnel to replace a component of the turbine engine when necessary, to optimally schedule maintenance tasks of the turbine engine based on contractual and/or maintenance resources, etc.

Examples disclosed herein include an example asset workscope generation system (AWGS) to combine field data, statistical analytic tools, engineering physics-based models, prediction simulators integrated with forecasted mission requirements, etc., to develop a recommended modular workscope and a timing to perform the recommended modular workscope for an asset such as a turbine engine to satisfy customer contractual and field personnel expectations. As used herein, the term "workscope" refers to a set of tasks (e.g., one or more maintenance tasks, service tasks, etc.) executed by maintenance personnel to improve an operating condition of an asset, where the operating condition is determined based on requirements such as contractual requirements, environmental requirements, regulatory requirements, utilization requirements, etc., and/or a combination thereof. In some examples, the AWGS obtains asset monitoring information from one or more assets, a network, a server, etc. As used herein, the term asset monitoring information refers to information corresponding to one or more assets such as asset sensor information, asset environmental information, asset utilization information, asset configuration information, asset history information, asset class history information, asset workscope quantifiers, etc.

In some examples, the AWGS identifies target assets for removal from service (e.g., removal from an aircraft, removal from a facility, removal from use, etc.) based on calculating an asset health quantifier. As used herein, the term "asset health quantifier" refers to a numerical representation corresponding to a health status, an operational status, etc., of an asset, an asset component, etc. For example, the asset health quantifier can be represented by a percentage of useful life remaining, a number of flight cycles (e.g., a number of flight cycles to be executed before service is performed, etc.), a quantity of time-on-wing (TOW) hours (e.g., a number of time-on-wing hours before service is performed, etc.), etc. For example, an asset health quantifier of 75% for a turbine engine booster compressor can correspond to the booster compressor having 75% of useful life remaining before the booster compressor may become non-responsive or requires a maintenance action. In another example, an asset health quantifier of 500 cycles for a turbine engine fan section can correspond to the turbine engine fan section executing 500 cycles before the fan section can be serviced to satisfy a contractual requirement.

In some examples, the AWGS can execute one or more engineering physics-based models, historical information-based models, statistical models, etc., and/or a combination thereof to generate an actual asset health quantifier for an asset, an asset component, an asset module, etc. In some examples, the AWGS can generate a projected asset health quantifier based on forecasted mission requirements of the asset (e.g., forecasted contractual requirements, forecasted environmental information, etc.).

In some examples, the AWGS can identify one or more target assets for removal based on comparing one or more asset health quantifiers (e.g., an actual asset health quantifier, a projected asset health quantifier, etc.) to a threshold, determine whether the one or more asset health quantifiers satisfy the threshold, and identify the one or more target assets for removal based on the comparison.

In some examples, the AWGS generates a workscope task for the target asset. For example, the AWGS can identify a set of tasks (e.g., maintenance tasks, service tasks, etc.) to perform maintenance on a fan section (e.g., one or more fan blades, etc.) of a turbine engine. For example, the AWGS can identify maintenance costs corresponding to each task in the set of tasks. For example, the AWGS can calculate a cost based on a quantity of maintenance personnel and corresponding man-hours to perform a maintenance task, a quantity of components (e.g., a quantity of replacement parts, spare parts, shop-supplied parts, etc., and/or a combination thereof) to perform the maintenance task, a monetary cost for each of the components, etc.

In some examples, the AWGS optimizes and/or otherwise improves a workscope based on the generated workscope tasks for the target asset. For example, the AWGS can generate a plurality of workscopes in which each workscope includes a combination of one or more of the generated workscope tasks. The example AWGS can calculate an estimate asset health quantifier for the target asset based on estimating what the asset health quantifier for the target asset can be in response to performing a specified workscope on the target asset. The example AWGS can calculate an estimate asset health quantifier for each one of the generated workscopes. The example AWGS can identify a workscope for the target asset based on one or more factors such as comparing the calculated estimate asset health quantifiers to contractual requirements, customer requirements, operational constraints, etc., and/or a combination thereof.

In some examples, the AWGS calculates a workscope quantifier based on comparing a first asset health quantifier for a target asset to a second asset health quantifier for the target asset. For example, the first asset health quantifier can be an asset health quantifier (e.g., an actual asset health quantifier, a projected asset health quantifier, etc.) of the target asset prior to completing a workscope on the target asset. The second asset health quantifier can be an asset health quantifier (e.g., an actual asset health quantifier, a projected asset health quantifier, etc.) of the target asset after completing the workscope on the target asset. For example, the AWGS can calculate a workscope quantifier by calculating a difference between the first and the second asset health quantifiers.

In some examples, the AWGS can compare the workscope quantifier to a workscope quantifier threshold and determine whether the workscope quantifier threshold has been satisfied based on the comparison. In some examples, the AWGS can modify one or more components of the AWGS in response to the workscope quantifier threshold being satisfied. For example, the AWGS can update one or more models, one or more parameters corresponding to a maintenance task, improve an optimization parameter for evaluating generated workscopes, etc., and/or a combination thereof in response to the workscope quantifier threshold being satisfied. While example assets described herein have been illustrated in terms of engines, such as a turbine engine, diesel engine, etc., the systems and methods disclosed and described herein can also apply to assets such as wind turbines, additive printing machines, locomotive engines, health imaging equipment such as computed tomography scanners, etc., or any other type of mechanical, electrical, or electro-mechanical device. Additionally or alternatively, the systems and methods disclosed and described herein can also apply to any asset that has modular elements that require maintenance planning and scheduling a removal within requirement constraints such as contractual constraints corresponding to a management of spare assets.

Examples disclosed herein include an asset health calculator apparatus to identify a target asset for removal from service based on calculating an asset health quantifier of the target asset. In some examples, the asset health calculator apparatus obtains asset monitoring information corresponding to the target asset. For example, the asset health calculator apparatus can obtain asset sensor information, asset environmental information, asset utilization information, etc., and/or a combination thereof corresponding to the target asset.

In some examples, the asset health calculator apparatus executes one or more models such as an engineering physics-based model, a statistical model, etc., to generate an asset health quantifier for an asset, an asset component, an asset module, etc. In some examples, the asset health calculator apparatus generates a projected asset health quantifier based on forecasted mission requirements of the asset such as forecasted environmental information, forecasted utilization information, etc., to determine whether a degradation of the asset component will cause an unexpected shop visit (e.g., a shop visit prior to a next scheduled or anticipated shop visit, etc.).

In some examples, the asset health calculator apparatus calculates a projected asset health quantifier of an asset component by predicting an estimate of the actual asset health quantifier of the asset component based on an anticipated deterioration of the asset component over time. For example, the asset health calculator apparatus can predict the deterioration by using the actual asset health quantifier as an initial actual asset health quantifier of the asset component, and extrapolating the initial actual asset health quantifier to the projected asset health quantifier by executing one or more models using forecasted mission requirements including a number of flight cycles, a quantity of time-on-wing hours, etc.

In some examples, the asset health calculator apparatus aggregates and ranks the actual asset health quantifiers, the projected asset health quantifiers, etc. For example, the asset health calculator apparatus can rank assets or components of the assets based on the generated asset health quantifiers. In some examples, the asset health calculator apparatus compares an asset health quantifier to a threshold (e.g., an asset health quantifier threshold, a maintenance quantifier threshold, etc.) and determines whether the asset health quantifier satisfies the threshold based on the comparison.

In some examples, the asset health calculator apparatus identifies a first set of candidate assets including one or more assets as candidate(s) for removal based on comparing an asset health quantifier of an asset to a threshold and determining whether the asset health quantifier satisfies the threshold based on the comparison. For example, the asset health calculator apparatus can identify a turbine engine for removal from service to perform a maintenance activity on the turbine engine based on an asset health quantifier for the turbine engine satisfying a threshold.

In some examples, the asset health calculator apparatus identifies a second set of candidate assets including one or more assets as candidate(s) for removal based on non-asset monitoring information. For example, the asset health calculator apparatus can identify a turbine engine for removal based on a time interval between maintenance tasks specified in a contract, customer technical forecast information, customer spare part information, etc., for the turbine engine. As used herein, the term "contract" refers to an agreement between a turbine engine operator (e.g., an airline, a manufacturing plant, a power plant, etc.) and a turbine engine maintenance provider in which the turbine engine maintenance provider performs maintenance, service, etc., on an asset owned by the turbine engine operator.

In some examples, the asset health calculator apparatus compares candidate assets in the first set to the second set. In some examples, the asset health calculator apparatus identifies target assets for removal based on the comparison. In some examples, the asset health calculator apparatus generates a removal schedule for the identified target assets. For example, the asset health calculator apparatus can determine that the identified target assets correspond to one contract or more than one contract. For example, in response to determining that the target assets correspond to one contract, the asset health calculator apparatus can generate an optimal removal schedule of the target assets based on performing an optimization process such as an iterated local search.

In another example, in response to determining that the target assets correspond to more than one contract, the asset health calculator apparatus can generate a removal schedule for the target assets using methods such as integer programming, myopic optimization (e.g., a rolling optimization method, etc.), single level optimization, top-down optimization, bottom-up optimization, etc., and/or a combination thereof. For example, the asset health calculator apparatus can generate a removal schedule using single level optimization by optimizing and/or otherwise improving each asset corresponding to each contract simultaneously (or substantially simultaneously given data processing, transmission, and storage latency).

In another example, the asset health calculator apparatus can generate a removal schedule using top-down optimization by generating a high-level, top-level, etc., target removal schedule for each contract, generating a candidate removal schedule for each contract, and generating an optimized and/or otherwise improved removal schedule for the contracts based on the comparison of the target removal schedules to the candidate removal schedules. In another example, the asset health calculator apparatus can generate a removal schedule using bottom-up optimization by generating candidate removal schedules for each contract, combining the candidate removal schedules, and re-adjusting the candidate removal schedules to help ensure global feasibility with respect to one or more factors such as customer constraints, maintenance facility constraints, spare part availability constraints, etc., and/or a combination thereof.

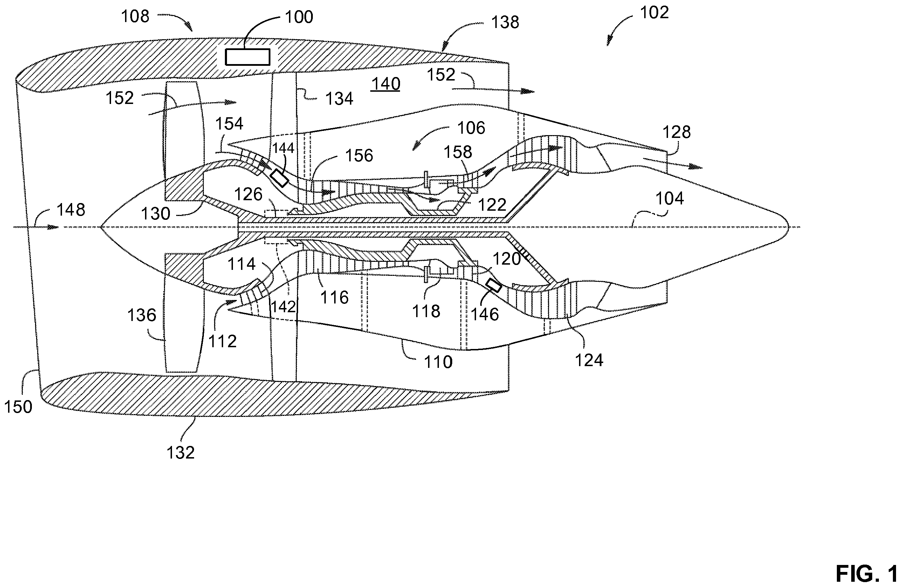

FIG. 1 is a schematic illustration of an example turbine engine controller 100 monitoring an example gas turbine engine 102. In the illustrated example, the turbine engine controller 100 is a full-authority digital engine control (FADEC) unit. For example, the turbine engine controller 100 can include a closed loop control module to generate a control input (e.g., a thrust command, a de-rate parameter, etc.) to the engine 102 based on an engine input (e.g., a pilot command, an aircraft control system command, etc.). Alternatively, the turbine engine controller 100 may be any other type of data acquisition and/or control computing device. FIG. 1 illustrates a cross-sectional view of the engine 102 that can be utilized within an aircraft in accordance with aspects of the disclosed examples. The gas turbine engine 102 is shown having a longitudinal or axial centerline axis 104 extending throughout the gas turbine engine 102 for reference purposes. In general, the engine 102 can include a core gas turbine engine 106 and a fan section 108 positioned upstream thereof. The core gas turbine engine 106 can generally include a substantially tubular outer casing 110 that defines an annular inlet 112. In addition, the outer casing 110 can further enclose and support a booster compressor 114 for increasing the pressure of the air that enters the core gas turbine engine 106 to a first pressure level. A high-pressure, multi-stage, axial-flow compressor 116 can then receive the pressurized air from the booster compressor 114 and further increase the pressure of such air to a second pressure level. Alternatively, the high-pressure, multi-stage compressor 116 can be a high-pressure, multi-stage centrifugal compressor or a high-pressure, multi-stage axial-centrifugal compressor.

In the illustrated example of FIG. 1, the pressurized air exiting the high-pressure compressor 116 can then flow to a combustor 118 within which fuel is injected into the flow of pressurized air, with the resulting mixture being combusted within the combustor 118. The high-energy combustion products are directed from the combustor 118 along the hot gas path of the engine 102 to a first (high-pressure) turbine 120 for driving the high-pressure compressor 116 via a first (high-pressure) drive shaft 122, and then to a second (low-pressure) turbine 124 for driving the booster compressor 114 and fan section 108 via a second (low-pressure) drive shaft 126 that is generally coaxial with first drive shaft 122. After driving each of the turbines 120 and 124, the combustion products can be expelled from the core gas turbine engine 106 via an exhaust nozzle 128 to provide propulsive jet thrust.

In some examples, each of the compressors 114, 116 can include a plurality of compressor stages, with each stage including both an annular array of stationary compressor vanes and an annular array of rotating compressor blades positioned immediately downstream of the compressor vanes. Similarly, each of the turbines 120, 124 can include a plurality of turbine stages, with each stage including both an annular array of stationary nozzle vanes and an annular array of rotating turbine blades positioned immediately downstream of the nozzle vanes.

Additionally, as shown in FIG. 1, the fan section 108 of the engine 102 can generally include a rotatable, axial-flow fan rotor assembly 130 that is configured to be surrounded by an annular fan casing 132. The fan casing 132 can be configured to be supported relative to the core gas turbine engine 106 by a plurality of substantially radially-extending, circumferentially-spaced outlet guide vanes 134. As such, the fan casing 132 can enclose the fan rotor assembly 130 and its corresponding fan rotor blades 136. Moreover, a downstream section 138 of the fan casing 132 can extend over an outer portion of the core gas turbine engine 106 to define a secondary, or by-pass, airflow conduit 140 that provides additional propulsive jet thrust.

In some examples, the second (low-pressure) drive shaft 126 is directly coupled to the fan rotor assembly 130 to provide a direct-drive configuration. Alternatively, the second drive shaft 126 can be coupled to the fan rotor assembly 130 via a speed reduction device 142 (e.g., a reduction gear or gearbox) to provide an indirect-drive or geared drive configuration. Such a speed reduction device(s) can also be provided between any other suitable shafts and/or spools within the engine 102 as desired or required.

In the illustrated example of FIG. 1, the engine 102 includes sensors 144, 146 communicatively coupled to the turbine engine controller 100. Alternatively, the sensors 144, 146 can be communicatively coupled to a control system of an aircraft coupled to the engine 102, in which the control system is communicatively coupled to the example turbine engine controller 100. In the illustrated example, the sensors 144, 146 are gas-path temperature sensors (e.g., exhaust gas-path temperature sensors, etc.). For example, the sensors 144, 146 can be monitoring a compressor inlet temperature and a temperature of gas exiting the high-pressure turbine 120. Alternatively, the sensors 144, 146 can be chip detector sensors (e.g., magnetic chip detector sensors, etc.), dust sensors, flow sensors, gas-path pressure sensors, rotor speed sensors, vibration sensors, position sensors (e.g., actuator position sensors, sensors detailing variable geometry, etc.), etc. Although the sensors 144, 146 are depicted in FIG. 1 as being at specific locations, the sensors 144, 146 can be located elsewhere on the engine 102. Additionally or alternatively, there can be more than two sensors 144, 146 located on the engine 102. A typical implementation has six gas-path temperature sensors 144, 146. Additionally or alternatively, there can be more than one example turbine engine controller 100 coupled to the engine 102. Although the example turbine engine controller 100 is depicted in FIG. 1 as being proximate the fan section 108, the turbine engine controller 100 can be located elsewhere on the engine 102 or elsewhere on the aircraft coupled to the engine 102.

During operation of the engine 102, an initial air flow (indicated by arrow 148) can enter the engine 102 through an associated inlet 150 of the fan casing 132. The air flow 148 then passes through the fan blades 136 and splits into a first compressed air flow (indicated by arrow 152) that moves through conduit 140 and a second compressed air flow (indicated by arrow 154) which enters the booster compressor 114. The pressure of the second compressed air flow 154 is then increased and enters the high-pressure compressor 116 (as indicated by arrow 156). After mixing with fuel and being combusted within the combustor 118, the combustion products 158 exit the combustor 118 and flow through the first turbine 120. Thereafter, the combustion products 158 flow through the second turbine 124 and exit the exhaust nozzle 128 to provide thrust for the engine 102.

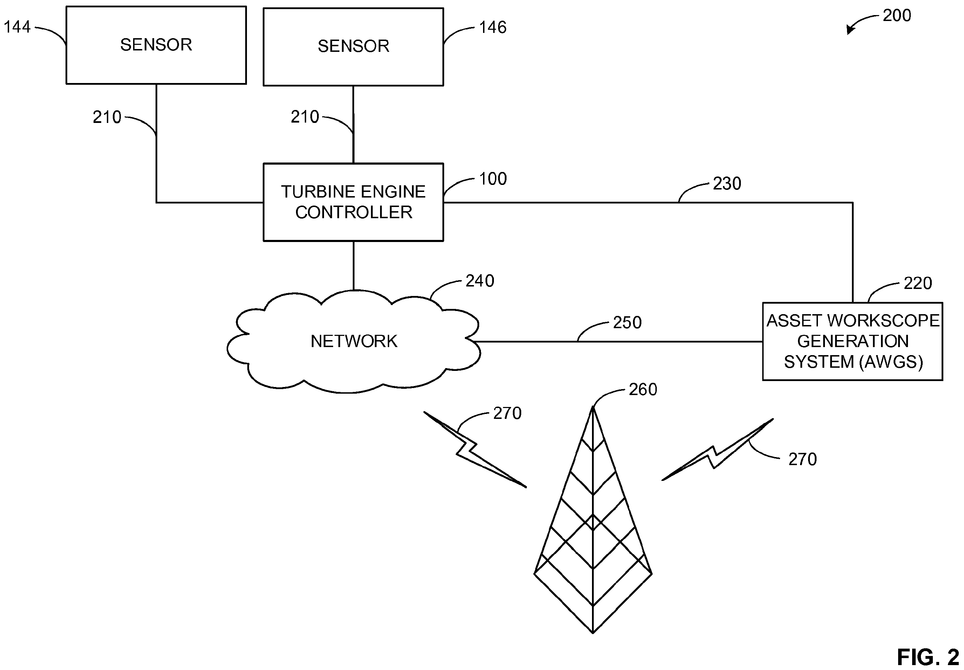

FIG. 2 is a schematic illustration of an example asset monitoring system 200 for the gas turbine engine 102 of FIG. 1. In the illustrated example of FIG. 2, the sensors 144, 146 of FIG. 1 are communicatively coupled to the turbine engine controller 100 via sensor connections 210. The example turbine engine controller 100 obtains asset sensor information (e.g., a pressure, a temperature, a speed of a rotor, etc.) from the sensors 144, 146 to monitor an operation of the gas turbine engine 102. The sensor connections 210 can include direct wired or direct wireless connections. For example, a direct wired connection can involve a direct connection using wires in a harness connecting the sensors to the turbine engine controller 100, or a bus such as the Engine Area Distributed Interconnect Network (EADIN) bus. In another example, the direct wireless connections can implement a Bluetooth® connection, a Wi-Fi Direct® connection, or any other wireless communication protocol. Further shown in FIG. 2 are an example asset workscope generation system (AWGS) 220, an example AWGS direct connection 230, an example network 240, an example AWGS network connection 250, an example wireless communication system 260, and an example wireless communication links 270.

In the illustrated example of FIG. 2, the example turbine engine controller 100 is shown to be communicatively coupled to the AWGS 220 via the AWGS direct connection 230. For example, the AWGS 220 can obtain asset operation information such as flight data (e.g., altitudes, turbine engine speeds, engine exhaust temperatures, etc.), asset sensor information, etc., from the turbine engine controller 100 via the AWGS direct connection 230. The example AWGS direct connection 230 can be a direct wired or a direct wireless connection. For example, the AWGS 220 can download asset information (e.g., asset operation information, asset sensor information, etc.) of the engine 102 via a manual download of the data from the turbine engine controller 100 to a computing device such as a laptop, a server, etc., followed by a subsequent upload to the AWGS 220. Alternatively, the example AWGS 220 can be directly connected to the turbine engine controller 100 to obtain asset information.

The AWGS 220 of the illustrated example is a server that collects and processes asset information of the engine 102. Alternatively or in addition, the example AWGS 220 can be a laptop, a desktop computer, a tablet, or any type of computing device or a network including any number of computing devices. The example AWGS 220 analyzes the asset information of the engine 102 to determine an asset workscope. For example, the AWGS 220 can determine that the high-pressure compressor 116 of FIG. 1 requires a water-wash based on a comparison of an asset health quantifier of the high-pressure compressor 116 to an asset health quantifier threshold corresponding to the high-pressure compressor 116, an elapsing of a time interval specified in a contract, etc.

Additionally or alternatively, the example AWGS 220 can obtain asset information from the example turbine engine controller 100 via the network 240. For example, the AWGS 220 can obtain asset information of the engine 102 from the turbine engine controller 100 by connecting to the network 240 via the AWGS network connection 250. The example AWGS network connection 250 can be a direct wired or a direct wireless connection. For example, the turbine engine controller 100 can transmit asset information to a control system of an aircraft coupled to the engine 102. The aircraft control system can subsequently transmit the asset information to the example AWGS 220 via the network 240 (e.g., via the AWGS network connection 250, the wireless communication links 270, etc.).

The example network 240 of the illustrated example of FIG. 2 is the Internet. However, the example network 240 can be implemented using any suitable wired and/or wireless network(s) including, for example, one or more data buses, one or more Local Area Networks (LANs), one or more wireless LANs, one or more cellular networks, one or more private networks, one or more public networks, etc. The example network 240 enables the example turbine engine controller 100 to be in communication with the example AWGS 220. As used herein, the phrase "in communication," including variances therefore, encompasses direct communication and/or indirect communication through one or more intermediary components and does not require direct physical (e.g., wired) communication and/or constant communication, but rather includes selective communication at periodic and/or aperiodic intervals, as well as one-time events.

In some examples, the turbine engine controller 100 is unable to transmit asset information to the AWGS 220 via the AWGS direct connection 230, the AWGS network connection 250, etc. For example, a routing device upstream of the AWGS 220 can stop providing functional routing capabilities to the AWGS 220. In the illustrated example, the turbine engine health monitoring system 200 includes additional capabilities to enable communication (e.g., data transfer) between the AWGS 220 and the network 240. As shown in FIG. 2, the example AWGS 220 and the example network 240 include the capabilities to transmit and/or receive asset information through the example wireless communication system 260 (e.g., the cellular communication system, the satellite communication system, the air band radio communication system, the Aircraft Communications Addressing and Reporting System (ACARS), etc.) via the example wireless communication links 270.

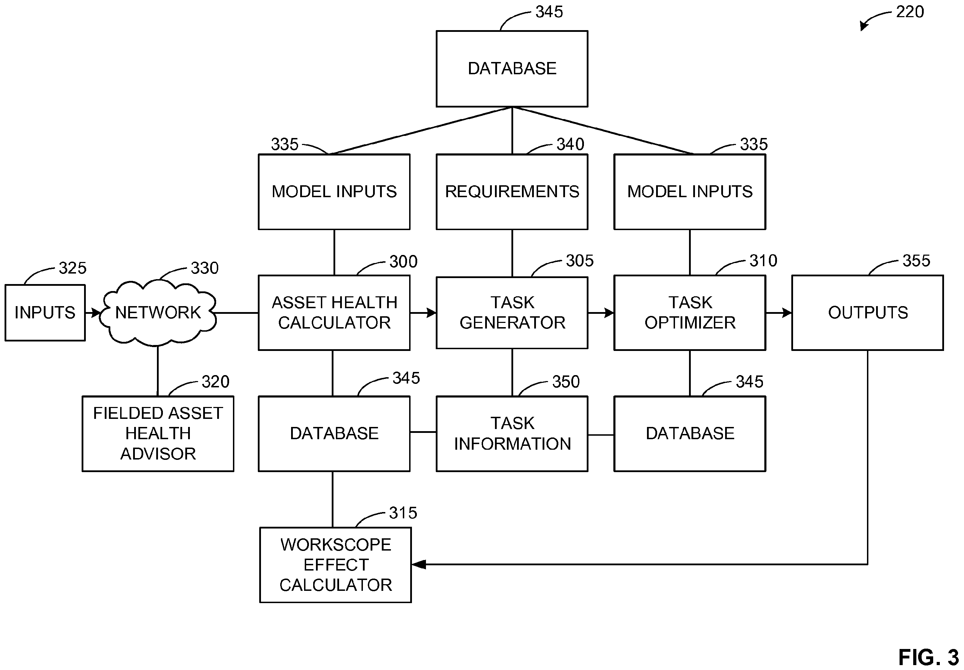

The wireless communication links 270 of the illustrated example of FIG. 2 are cellular communication links. However, any other method and/or system of communication can additionally or alternatively be used such as an Ethernet connection, a Bluetooth connection, a Wi-Fi connection, a satellite connection, etc. Further, the example wireless communication links 270 of FIG. 2 can implement cellular connections via a Global System for Mobile Communications (GSM). However, any other systems and/or protocols for communications can be used such as Time Division Multiple Access (TDMA), Code Division Multiple Access (CDMA), Worldwide Interoperability for Microwave Access (WiMAX), Long Term Evolution (LTE), etc. FIG. 3 is a block diagram of an example implementation of the example AWGS 220 of FIG. 2. The example AWGS 220 includes an example asset health calculator 300, an example task generator 305, an example task optimizer 310, an example workscope effect calculator 315, an example fielded asset health advisor (FAHA) 320, example inputs 325, an example network 330, example model inputs 335, example requirements 340, an example database 345, example task information 350, and example outputs 355.

In the illustrated example of FIG. 3, the AWGS 220 includes the example asset health calculator 300 to identify a target asset such as the engine 102 of FIG. 1 for removal to perform a task to improve an operating condition of the target asset. In some examples, the asset health calculator 300 calculates an actual asset health quantifier (AHQ) of an asset based on the inputs 325 (e.g., asset sensor data, engine control inputs, etc.) obtained via the network 330. The example network 330 can implement or correspond to the example network 240 of FIG. 2. For example, the asset health calculator 300 can obtain inputs based on an inspection of the asset by an asset maintenance technician. In another example, the asset health calculator 300 can obtain asset information from the turbine engine controller 100 of the engine 102 of FIGS. 1-2 via the AWGS direct connection 230 of FIG. 2, the AWGS network connection 250 of FIG. 2, the wireless communication links 270 of FIG. 2, etc.

In some examples, the asset health calculator 300 calculates a projected AHQ based on the model inputs 335. For example, the asset health calculator 300 can estimate an operating condition of the engine 102 after the engine 102 completes a specified number of cycles (e.g., flight cycles, operation cycles, etc.). For example, the asset health calculator 300 can simulate the engine 102 completing the specified number of flight cycles by executing a digital twin model of the engine 102 for the specified number of flight cycles. As used herein, the term "flight cycle" refers to a complete operation cycle of an aircraft flight executed by an asset including a take-off operation and a landing operation.

As used herein, the term "digital twin" refers to a digital representation, a digital model, or a digital "shadow" corresponding to a digital informational construct about a physical system. That is, digital information can be implemented as a "twin" of a physical device/system (e.g., the engine 102, etc.) and information associated with and/or embedded within the physical device/system. The digital twin is linked with the physical system through the lifecycle of the physical system. In certain examples, the digital twin includes a physical object in real space, a digital twin of that physical object that exists in a virtual space, and information linking the physical object with its digital twin. The digital twin exists in a virtual space corresponding to a real space and includes a link for data flow from real space to virtual space as well as a link for information flow from virtual space to real space and virtual sub-spaces. The links for data flow or information flow correspond to a digital thread that represents a communication framework between sources of data and the digital twin model. The digital thread can enable an integrated view of asset data throughout a lifecycle of the asset. For example, the digital twin model can correspond to the virtual model of the asset and the digital thread can represent the connected data flow between an asset data source and the virtual model.

In some examples, the asset health calculator 300 identifies a target asset for removal based on comparing an actual AHQ to an actual AHQ threshold and identifying the target asset for removal based on the comparison. In some examples, the asset health calculator identifies a target asset for removal based on comparing a projected AHQ to a projected AHQ threshold and identifying the target asset for removal based on the comparison. In some examples, the asset health calculator 300 generates a removal schedule for one or more target assets based on requirements such as contractual requirements, maintenance resources, spare part inventory, etc., and/or a combination thereof.

In some examples, the AHQ threshold (e.g., the actual AHQ threshold, the projected AHQ threshold, etc.) of an asset, an asset component, etc., represents an indicator, which when satisfied, corresponds to the asset, the asset component, etc., being identified as a candidate for removal to perform maintenance, service, etc. For example, the asset health calculator 300 can compare an actual AHQ of 50 cycles (e.g., flight cycles, flight operations, etc.) remaining (e.g., until service can be performed, until the asset component is taken off-wing, etc.) for the booster compressor 114 of FIG. 1 to an actual AHQ threshold of 100 cycles remaining and identify the booster compressor 114 of FIG. 1 as a candidate for removal based on the actual AHQ being less than the actual AHQ threshold. In another example, the asset health calculator 300 can compare an actual AHQ of 200 hours operating remaining for the booster compressor 114 of FIG. 1 to an actual AHQ threshold of 250 hours operating remaining and identify the booster compressor 114 of FIG. 1 as a candidate for removal based on the actual AHQ being less than the actual AHQ threshold. For example, the actual AHQ threshold, the projected AHQ threshold, etc., can be determined based on a contractual requirement, historical-based information of previously repaired assets and/or asset components, etc.

In the illustrated example of FIG. 3, the AWGS 220 includes the task generator 305 to generate a workscope task for the target asset based on obtaining an AHQ from the asset health calculator 300. For example, the task generator 305 can obtain an AHQ for the engine 102, an AHQ for the booster compressor 114 of the engine 102, etc. In some examples, the task generator 305 identifies an asset component to be processed based on comparing an AHQ to an AHQ threshold and identifying the asset component based on the comparison. For example, the task generator 305 can compare an actual AHQ of 30% useful life remaining for the booster compressor 114 to an actual AHQ threshold of 50% useful life remaining and identify the booster compressor 114 for replacement based on the actual AHQ being less than the actual AHQ threshold.

In some examples, the task generator 305 identifies an asset component to be processed based on the requirements 340 obtained from the database 345. For example, the task generator 305 can compare an actual AHQ of 100 cycles for the booster compressor 114 to an actual AHQ threshold of 200 cycles for the booster compressor 114 based on contractual requirements (e.g., a contract specifies that a booster compressor must be serviced when the actual AHQ goes below 200 cycles). In such an example, the task generator 305 can identify the booster compressor 114 for processing based on the actual AHQ being less than the actual AHQ threshold.

In response to identifying one or more asset components to be processed, the example task generator 305 can generate a set of workscope tasks that can be performed on the one or more asset components. For example, the task generator 305 can determine the set of tasks based on obtaining the task information 350 from the database 345. For example, the task generator 305 can query the database 345 with the identified component for processing (e.g., the booster compressor 114) and the actual AHQ of the component, and the database 345 can return task information including a list of tasks that can be performed with corresponding costs (e.g., labor costs, monetary costs, etc.), spare parts, tools, etc., for each task in the list.

In the illustrated example of FIG. 3, the AWGS 220 includes the task optimizer 310 to identify an optimized workscope for a target asset based on the generated workscope tasks for the target asset and the model inputs 335. For example, the task optimizer 310 can generate a plurality of workscopes in which each workscope includes a combination of one or more of the workscope tasks obtained from the task generator 305. In such an example, the task optimizer 310 can store the plurality of workscopes in the database 345.

In some examples, the task optimizer 310 calculates an estimate asset health quantifier for the target asset to generate quantifiable metrics to evaluate an accuracy or an efficiency of the AWGS 220 in improving an operating condition of the engine 102. For example, the task optimizer 310 can calculate an asset health quantifier for the target asset in response to performing a specified workscope on the target asset. For example, the task optimizer 310 can obtain an actual AHQ of the target asset calculated by the asset health calculator 300, select a workscope of interest for the target asset, and calculate an estimate AHQ of the target asset if the selected workscope were to be performed on the target asset. In some examples, the workscope effect calculator 315 calculates an actual AHQ of the target asset after the selected workscope is completed on the target asset and compares the actual AHQ to the estimate asset health quantifier calculated by the task optimizer 310 to determine an accuracy of the AWGS 220 based on the comparison.

In some examples, the task optimizer 310 calculates an estimate AHQ by executing one or models such as a digital twin model of the target asset to generate the model inputs 335. For example, a digital twin model can be implemented using an artificial neural network and/or other machine learning/artificial intelligence to form connections between inputs and outputs and drive evaluation and behavior through patterns, feedback, optimization, etc.

In some examples, the task optimizer 310 calculates an estimate asset health quantifier for each one of the generated workscopes. In some examples, the task optimizer 310 selects a workscope to be performed on the target asset based on one or more factors such as comparisons of the calculated estimate asset health quantifiers to contractual requirements, customer requirements, operational constraints, etc., and/or a combination thereof. In such examples, the outputs 355 correspond to the selected workscope including a set of tasks to be performed on the target asset and corresponding workscope information. For example, the workscope information can include an assignment of maintenance personnel, a service facility, spare parts, tools, etc., to the workscope based on a removal schedule identified by the asset health calculator 300.

In the illustrated example of FIG. 3, the AWGS 220 includes the workscope effect calculator 315 to generate a predictive asset health quantifier of a turbine engine. For example, the workscope effect calculator 315 can determine one or more de-rate parameters of the turbine engine based on the inputs 325. For example, the workscope effect calculator 315 can determine a value for a takeoff de-rate parameter, a climb de-rate parameter, etc., of the engine 102. The example workscope effect calculator 315 can analyze the de-rate parameters to identify opportunities for increasing TOW, lowering turbine engine maintenance cost, etc., of the engine 102 while respecting operator metrics (e.g., fuel burn, mission times, etc.).

In some examples, the workscope effect calculator 315 generates asset and/or asset component performance and severity models based on the deviations. For example, the workscope effect calculator 315 can translate the impact of environmental factors, operational factors, etc., to asset and/or asset component health factors that drive maintenance operations of the asset and/or the asset components. In some examples, the workscope effect calculator 315 generates a severity model using historical information. For example, the workscope effect calculator 315 can generate an asset health quantifier of an asset component as a function of TOW and an environmental or an operational condition. For example, the workscope effect calculator 315 can generate a severity model that maps TOW of an asset component such as a high-pressure compressor to one or more environmental parameters of significance to component life (e.g., TOW, etc.).

In some examples, the workscope effect calculator 315 generates recommendations to optimize and/or otherwise improve operator behavior corresponding to takeoff de-rate parameters, climb de-rate parameters, etc., when the asset is on-wing of an aircraft. For example, the workscope effect calculator 315 can generate a recommendation to adjust the operator behavior to increase TOW and improve turbine engine performance. For example, the workscope effect calculator 315 can generate a recommendation to change a climb time, a taper schedule (e.g., a turbine engine de-rate taper schedule, etc.), a de-rate parameter, etc., of the asset when on-wing of the aircraft. As used herein, the term "taper schedule" refers to a scheduled de-rating operation of a turbine engine as the turbine engine transitions between flight segments of a flight cycle. For example, the taper schedule can include instructions to operate the turbine engine at 5% de-rate during a takeoff and departure flight segment, at 15% de-rate during a climb flight segment, and at 40% de-rate during a cruise flight segment.

In some examples, the workscope effect calculator 315 generates a report including the recommendations. For example, the workscope effect calculator 315 can generate a report including a candidate improvement plan for identified operators as candidate improvement targets. For example, the candidate improvement plan can include a recommendation to change the climb time, the taper schedule, the de-rate parameter, etc., of the asset when on-wing of the aircraft. In some examples, the workscope effect calculator 315 generates an alert dashboard (e.g., an alert dashboard in a report, an alert dashboard in a web-based software application, etc.) indicating areas of improvement for an operator to improve TOW and to reduce maintenance cost of an asset.

In some examples, the workscope effect calculator 315 calculates an effect of performing a workscope on a target asset. In some examples, the workscope effect calculator 315 calculates a workscope quantifier which represents an accuracy or an efficiency of the AWGS 220 in improving an operating condition of the engine 102. In some examples, the workscope effect calculator 315 calculates an actual AHQ of the target asset in response to the selected workscope being performed on the target asset. In some examples, the workscope effect calculator 315 calculates the actual AHQ based on an inspection (e.g., a visual inspection, etc.) from maintenance personnel, sensor data from the sensors 144, 146 of FIG. 2, etc., and/or a combination thereof. For example, the workscope effect calculator 315 can calculate an actual AHQ of the high-pressure turbine 120 based on comparing (1) a first pressure value and/or a first temperature value of the high-pressure turbine 120 obtained from the sensors 144, 146 of FIG. 2 prior to the selected workscope being performed to (2) a second pressure value and/or a second temperature value of the high-pressure turbine 120 obtained from the sensors 144, 146 after the selected workscope being performed. In such an example, the workscope effect calculator 315 can calculate the actual AHQ based on the comparison.

In some examples, the workscope effect calculator 315 calculates a workscope quantifier based on comparing a first asset health quantifier of a target asset to a second asset health quantifier of the target asset. For example, the workscope effect calculator 315 can calculate a workscope quantifier based on a first actual AHQ calculated by the task optimizer 310 prior to a workscope being performed on the engine 102 and a second actual AHQ calculated by the workscope effect calculator 315 after a completion of the workscope. For example, the workscope quantifier can be a difference between the first and the second actual AHQ, a ratio of the first and the second actual AHQ, etc. For example, the workscope effect calculator 315 can calculate a workscope quantifier of 10% based on a difference between a first actual AHQ of 90% calculated by the task optimizer 310 and a second actual AHQ of 80% calculated by the workscope effect calculator 315 (e.g., 10% = 90% - 80%, etc.). In such an example, the workscope effect calculator 315 can determine that the AWGS 220 can be improved because the selected workscope did not improve an operating condition of the engine 102 to a level anticipated by the AWGS 220.

In some examples, the workscope effect calculator 315 modifies one or more components of the AWGS 220 based on the operator behavior (e.g., a de-rating behavior of owner assets, etc.). In some examples, the workscope effect calculator 315 modifies the one or more components of the AWGS 220 by calculating a workscope quantifier, comparing the workscope quantifier to a workscope quantifier threshold, and determining whether the workscope quantifier satisfies the workscope quantifier threshold based on the comparison. In some examples, the workscope quantifier threshold represents an indicator, when satisfied, identifies that the AWGS 220 can be improved by updating one or more components of the AWGS 220. For example, the workscope effect calculator 315 can obtain a first actual AHQ for the booster compressor 114 from the database 345 corresponding to an actual AHQ of 90% useful life remaining calculated by the task optimizer 310. The example workscope effect calculator 315 can generate a second actual AHQ of 70% useful life remaining based on an inspection of the booster compressor 114, the sensor data from the sensors 144, 146, etc.

The example workscope effect calculator 315 can calculate a workscope quantifier of 20% based on calculating a difference between the first and the second actual AHQ (e.g., 20% = 90% - 70%, etc.). In another example, the workscope effect calculator 315 can calculate a workscope quantifier of 0.78 based on calculating a ratio of the first and the second actual AHQ (e.g., 0.78 = 0.70 ÷ 0.90, etc.). In such an example, the workscope effect calculator 315 can compare the workscope quantifier of 0.78 to a workscope quantifier threshold of 0.85 and determine whether the workscope quantifier satisfies the workscope quantifier threshold. For example, the workscope effect calculator 315 can determine to modify a component of the AWGS 220 based on the workscope quantifier being less than the workscope quantifier threshold.

In response to determining that the workscope quantifier satisfies the workscope quantifier threshold, the example workscope effect calculator 315 can regenerate the example asset health calculator 300, the example task generator 305, the example task optimizer 310, the example model inputs 335, the example requirements 340, the example database 345, the example task information 350, etc., and/or a combination thereof. For example, the workscope effect calculator 315 can direct a digital twin model of the engine 102 to update to a latest version of the digital twin model incorporating up-to-date historical trend information, model parameters, model algorithms, etc. In another example, the workscope effect calculator 315 can direct the database 345 to update to include a latest version of the task information 350. In yet another example, the workscope effect calculator 315 can direct the task optimizer 310 to update one or more algorithms, calculation parameters, etc., used by the task optimizer 310 to a latest version.

In the illustrated example of FIG. 3, the AWGS 220 includes the FAHA 320 to generate a recommendation to improve operational usage of an asset. In some examples, the FAHA 320 obtains sensor data from the sensors 144, 146 of FIG. 2, model information (e.g., outputs from a physics-based model of an asset, a stochastic model of an asset, etc.), etc., to generate analytics and diagnostics corresponding to a health of the asset. For example, the FAHA 320 can be a software application executing on a computing device (e.g., a desktop computer, a tablet, a smartphone, etc.) to generate asset health information (e.g., an actual AHQ, a projected AHQ, etc.), asset usage recommendations, etc. In other examples, the FAHA 320 can be implemented as a dedicated hardware device (e.g., an application-specific integrated circuit, firmware device, etc.) to monitor asset operation and generate asset health information, asset usage recommendation, etc.

In the illustrated example, the FAHA 320 is communicatively coupled to the network 330. For example, the FAHA 320 can obtain sensor data from the sensors 144, 146, obtain an up-to-date version of one or more models, obtain an up-to-date version of an algorithm or a calculation parameter used by the asset health calculator 300, etc., via the network 330. Alternatively, the example FAHA 320 may not be communicatively coupled to the network 330 (e.g., the FAHA 320 is executing on a standalone device not communicatively coupled to the network 330, etc.).

In the illustrated example of FIG. 3, the AWGS 220 includes the database 345 to record data (e.g., asset health quantifiers, workscope quantifiers, the inputs 325, the model inputs 335, the requirements 340, the task information 350, etc.). In the illustrated example, the database 345 is communicatively coupled to the asset health calculator 300, the task generator 305, the task optimizer 310, the workscope effect calculator 315, and the FAHA 320 (e.g., when communicatively coupled to the network 330, etc.). The example database 345 can respond to queries for information related to data in the database 345. For example, the database 345 can respond to queries for additional data by providing the additional data (e.g., the one or more data points), by providing an index associated with the additional data in the database 345, etc. The example database 345 can additionally or alternatively respond to queries when there is no additional data in the database 345 by providing a null index, an end of database identifier, etc. For example, the asset health calculator 300 can query the database 345 for asset sensor data, asset environmental data, utilization data, etc., corresponding to the engine 102. In response to the query, the example database 345 can transmit the data and corresponding information such as data logs, maintenance history, etc., to the example asset health calculator 300.

The example database 345 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., flash memory). The example database 345 can additionally or alternatively be implemented by one or more double data rate (DDR) memories, such as DDR, DDR2, DDR3, DDR4, mobile DDR (mDDR), etc. The example database 345 can additionally or alternatively be implemented by one or more mass storage devices such as hard disk drive(s), compact disk drive(s) digital versatile disk drive(s), solid-state drives, etc. While in the illustrated example the database 345 is illustrated as a single database, the database 345 can be implemented by any number and/or type(s) of databases.

While an example implementation of the AWGS 220 of FIG. 2 is illustrated in FIG. 3, one or more of the elements, processes, and/or devices illustrated in FIG. 3 may be combined, divided, re-arranged, omitted, eliminated, and/or implemented in any other way. Further, the example asset health calculator 300, the example task generator 305, the example task optimizer 310, the example workscope effect calculator 315, the example FAHA 320, the example inputs 325, the example network 330, the example model inputs 335, the example requirements 340, the example database 345, the example task information 350, the example outputs 355 and/or, more generally, the example AWGS 220 of FIG. 3 may be implemented by hardware, software, firmware and/or any combination of hardware, software and/or firmware. Thus, for example, any of the example asset health calculator 300, the example task generator 305, the example task optimizer 310, the example workscope effect calculator 315, the example FAHA 320, the example inputs 325, the example network 330, the example model inputs 335, the example requirements 340, the example database 345, the example task information 350, the example outputs 355 and/or, more generally, the example AWGS 220 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example asset health calculator 300, the example task generator 305, the example task optimizer 310, the example workscope effect calculator 315, the example FAHA 320, the example inputs 325, the example network 330, the example model inputs 335, the example requirements 340, the example database 345, the example task information 350, and/or the example outputs 355 is/are hereby expressly defined to include a non-transitory computer readable storage device or storage disk such as a memory, a digital versatile disk (DVD), a compact disk (CD), a Blu-ray disk, etc. including the software and/or firmware. Further still, the example AWGS 220 of FIG. 2 may include one or more elements, processes and/or devices in addition to, or instead of, those illustrated in FIG. 3, and/or may include more than one of any or all of the illustrated elements, processes, and devices.

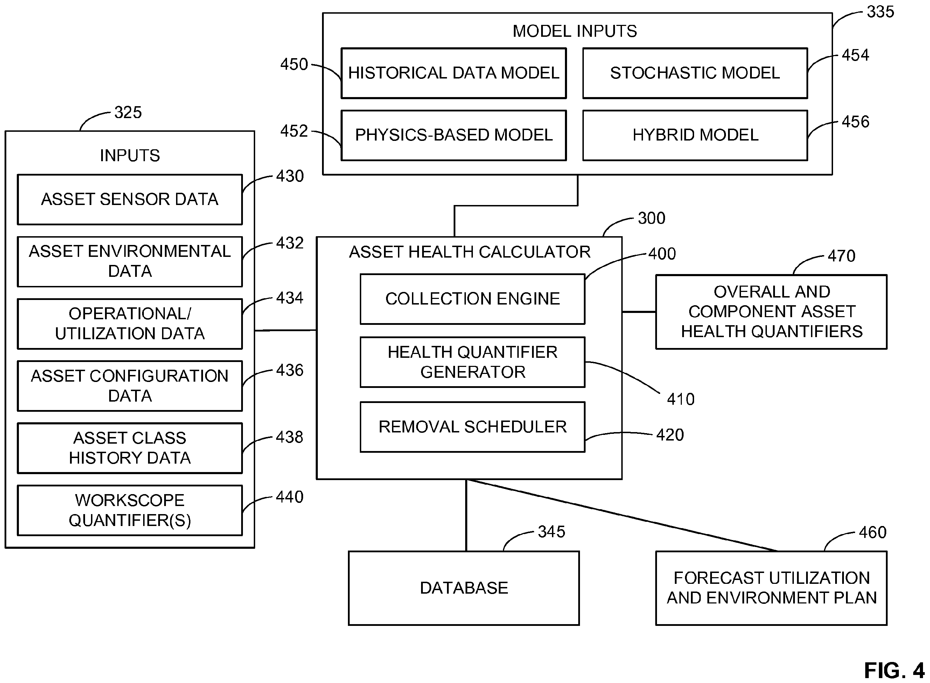

FIG. 4 is a block diagram of an example implementation of the example asset health calculator 300 of FIG. 3. The asset health calculator 300 of the illustrated example calculates, aggregates, and ranks AHQ (e.g., actual AHQ, projected AHQ, etc.) of an asset (e.g., the engine 102 of FIG. 1), an asset component (e.g., the booster compressor 114, the high-pressure turbine 120, etc.), etc. The asset health calculator 300 includes an example collection engine 400, an example health quantifier generator 410, and an example removal scheduler 420.

In the illustrated example of FIG. 4, the asset health calculator 300 includes the example collection engine 400 to obtain information of interest to process. In the illustrated example, the collection engine 400 obtains the inputs 325 to process. For example, the collection engine 400 can obtain the inputs 325 from the network 330 of FIG. 3. The inputs 325 of the illustrated example include example asset sensor data 430, example asset environmental data 432, example operational/utilization data 434, example asset configuration data 436, example asset class history data 438, and example workscope quantifier(s) 440.

In the illustrated example, the collection engine 400 obtains the asset sensor data 430 to determine operating conditions experienced by the engine 102 of FIG. 1. In some examples, the collection engine 400 obtains the asset sensor data 430 from the database 345 of FIG. 3. In some examples, the asset sensor data 430 corresponds to sensor data obtained from the sensors 144, 146 of FIG. 2. For example, the asset sensor data 430 can include sensor measurements such as a speed of a rotor, a pressure, a temperature, a vibration, etc., experienced by the engine 102 of FIG. 1. In some examples, the asset sensor data 430 includes a range of sensor measurements for an environmental parameter (e.g., a pressure, a temperature, etc.) measured by an environmental parameter sensor (e.g., a pressure sensor, a temperature sensor, etc.). In some examples, the asset sensor data 430 includes a duration of sensor measurements such as an amount of time the sensors 144, 146 measured a specific sensor measurement (e.g., an amount of time the sensors 144, 146 measured a pressure value of 100 PSI, an amount of time the sensors 144, 146 measured a temperature value of 2400 Rankine, etc.).

In the illustrated example, the collection engine 400 obtains the asset environmental data 432 to determine environmental conditions experienced by the engine 102. In some examples, the collection engine 400 obtains the asset environmental data 432 from the database 345 of FIG. 3. In some examples, the asset environmental data 432 includes a range of environmental condition parameters experienced by the engine 102. For example, the asset environmental data 432 can include a range of ambient temperatures (e.g., a range of 10-40 degrees Celsius, etc.), precipitation amounts, salt atmosphere percentages (e.g., a range of 5-55% salt atmosphere, etc.), a range of airborne particulate matter sizes (e.g., a size of a man-made airborne particulate matter, a size of a naturally occurring airborne particulate matter, etc.), humidity percentages (e.g., a range of 40-95% humidity, etc.), etc., experienced by the engine 102. In some examples, the asset environmental data 432 includes a duration of environmental condition parameters experienced by the engine 102. For example, the asset environmental data 432 can include an amount of time the engine 102 experienced a salt atmosphere of 30%, 40%, 50%, etc.

In the illustrated example of FIG. 4, the collection engine 400 obtains the operational/utilization data 434 to determine a usage of the engine 102. In some examples, the operational/utilization data 434 includes a utilization plan of the engine 102. For example, the operational/utilization data 434 can include a number of cycles (e.g., flight cycles, operation cycles, etc.), a number of hours in operation, types of flight routes (e.g., flights from a first destination to a second destination, etc.), a number of flight legs (e.g., a number of hours from a first destination to a second destination, etc.), etc., completed by the engine 102. In some examples, the operational/utilization data 434 includes operating behavior of one or more assets by one or more airline operators. For example, the operational/utilization data 434 can include operating rating information corresponding to an operation of the engine 102 compared to a rated maximum capacity of the turbine engine. For example, the operational/utilization data 434 can include average takeoff de-rate information, average climb de-rate information, etc. In another example, the operational/utilization data 434 can include an average thrust parameter of the engine 102, a percentage indicating how often the engine 102 is at full power during one or more cycles, etc.

In the illustrated example of FIG. 4, the collection engine 400 obtains the asset configuration data 436 to determine a current or an instant configuration of the engine 102. In some examples, a physical and/or software configuration of the engine 102 can be updated, upgraded, etc., over time as maintenance is performed on the engine 102. For example, the engine 102 can be refurbished with new components, upgraded components, etc. In another example, software of the turbine engine controller 100 of the engine 102 can be upgraded to adjust or control a variable geometry of the engine 102 when in operation. In such examples, the asset configuration data 436 can include a current list of components in the engine 102, a current software version of the turbine engine controller 100, etc.

In the illustrated example of FIG. 4, the collection engine 400 obtains the asset class history data 438 to determine a baseline operation parameter, performance parameter, reliability parameter, etc., of an asset in response to upgrading a hardware and/or a software component of the asset. For example, an asset class can correspond to a fleet of substantially similar assets used to generate a baseline durability parameter or a baseline reliability parameter by analyzing durability parameters, reliability parameters, etc., for the fleet. For example, the engine 102 can belong to a first asset class corresponding to a first baseline durability parameter, a first baseline reliability parameter, etc.

In such an example, an upgrade in a hardware and/or a software component of the engine 102 can cause the engine 102 to correspond to a second asset class corresponding to a second baseline durability parameter, a second baseline reliability parameter, etc., where the second parameters can be an improvement compared to the first parameters. In some examples, the collection engine 400 obtains the asset class history data 438 to ensure that the parameter tracker 405, the health quantifier generator 410, etc., uses the model inputs 335 based on the current asset class of the engine 102 compared to a previous asset class of the engine 102 (e.g., an asset class of the engine 102 prior to an upgrade, etc.).

In the illustrated example of FIG. 4, the collection engine 400 obtains the one or more workscope quantifiers 440 to determine an accuracy of AHQ generated by the asset health calculator 300. For example, the collection engine 400 can obtain a workscope quantifier of 10%, 20%, 30%, etc., calculated by the workscope effect calculator 315. For example, the asset health calculator 300 can determine to update one or more parameters of the asset health calculator 300 based on the workscope quantifier. For example, the asset health calculator 300 can update the model inputs 335 by updating a historical data model 450, a physics-based model 452, a stochastic model 454, a hybrid model 456, etc., and/or a combination thereof to incorporate a latest version of information, parameter values, etc.

In the illustrated example of FIG. 4, the asset health calculator 300 includes the health quantifier generator 410 to calculate actual AHQ, projected AHQ, etc., based on the model inputs 335. For example, the health quantifier generator 410 can obtain the model inputs 335 based on executing one or more of the historical data model 450, the physics-based model 452, the stochastic model 454, and the hybrid model 456. In such an example, the health quantifier generator 410 can use the model inputs 335 that are the most restrictive or the health quantifier generator 410 can use an average of one or more of the model inputs 335.

In some examples, the health quantifier generator 410 uses the historical data model 450 to generate the model inputs 335. For example, the historical data model 450 can generate the model inputs 335 by performing a statistical analysis on previous workscope operations. For example, the historical data model 450 can obtain information corresponding to assets similar in asset configuration, asset class, environment, utilization, etc., to the engine 102. In such an example, the historical data model 450 can generate metrics and quantifiers that can be applied to the engine 102. For example, the historical data model 450 can calculate a percentage of useful life remaining, a quantity of flight cycles remaining, a quantity of TOW hours remaining, etc., for the engine 102 based on how similar assets (e.g., assets with a substantially similar asset configuration, asset class history, etc.) have previously performed (e.g., previously performed after completing a similar workscope, etc.).

In some examples, the health quantifier generator 410 uses the physics-based model 452 to generate the model inputs 335. The example physics-based model 452 can be a digital twin model of the engine 102. For example, the digital twin model can simulate physics behavior, a thermodynamic health, a performance health, etc., of the engine 102. For example, the physics-based model 452 of the engine 102 can include one or more vibration models, stress models, thermo-mechanical models, aero-thermal models, aero-mechanical models, etc., of one or more sensors, asset components, etc., of the engine 102. For example, the physics-based model 452 can simulate inputs and outputs of the sensors 144, 146 of the engine 102. In some examples, the physics-based model 452 can simulate an operability of the engine 102 (e.g., an efficiency of the engine 102, etc.), a durability of the engine 102 (e.g., a mechanical stress on the fan section 108, the booster compressor 114, etc.), etc., based on simulating the engine 102 executing one or more flight cycles, flight legs, flight operations, etc.

In some examples, the health quantifier generator 410 uses the stochastic model 454 to generate metrics based on estimating probability distributions of potential outcomes by allowing for random variation in one or more inputs over time. In some examples, the stochastic model 454 generates the random variation based on fluctuations observed in historical data (e.g., the model inputs 335 based on the historical data model 450, etc.) for a selected time period using time-series techniques. For example, the stochastic model 454 can calibrate the random variation to be within limits set forth by the outputs from the historical data model 450. In some examples, the stochastic model 454 includes generating continuous probability distributions (e.g., Weibull distributions, reliability curves, etc.) to determine a distribution of failure rates over time due to one or more asset components. For example, the stochastic model 454 can generate a failure rate of the engine 102 based on determining failure rates for the fan section 108, the booster compressor 114, etc., of the engine 102.

In some examples, the health quantifier generator 410 uses the hybrid model 456 to generate the model inputs 335 using one or more of the historical data model 450, the physics-based model 452, and the stochastic model 454 of FIG. 4. For example, the hybrid model 456 can be the stochastic model 454 in which the outputs from the stochastic model 454 are compared to the physics-based model 452 and the outputs are adjusted based on the comparison. In another example, the hybrid model 456 can be the stochastic model 454 in which the outputs from the stochastic model 454 can be compared to the historical data model 450 and the outputs are adjusted or calibrated based on the comparison.

In some examples, the health quantifier generator 410 calculates an actual AHQ of an asset component based on actual AHQ of sub-components of the asset component. For example, the health quantifier generator 410 can calculate an actual AHQ for the fan section 108 of FIG. 1 based on calculating an actual AHQ for sub-components of the fan section 108 based on the model inputs 335. For example, the health quantifier generator 410 can calculate an actual AHQ of sub-components such as a fan blade, a bearing, a speed sensor, etc., of the fan section 108 by executing the physics-based model 452 of the engine 102. In such an example, the health quantifier generator 410 can generate an actual AHQ of the fan section 108 based on calculating an average (e.g., a weighted average, etc.) of the actual AHQ of the fan blade, the bearing, the speed sensor, etc., of the fan section 108. In some examples, the health quantifier generator 410 can rank the actual AHQ of the asset components (e.g., the fan section 108, the booster compressor 114, etc.) in an ascending order, a descending order, by criticality (e.g., a quantitative measure of how critical an asset component is to a function of the engine 102, etc.), etc.

In some examples, the health quantifier generator 410 calculates projected AHQ based on the model inputs 335. In some examples, the projected AHQ represents what an actual AHQ of an asset component can be based on forecast operating conditions. For example, the health quantifier generator 410 can calculate a projected AHQ for the booster compressor 114 of FIG. 1 based on an actual AHQ for the booster compressor 114 and generating the model inputs 335 based on a forecast utilization and environment plan 460. In some examples, the forecast utilization and environment plan 460 corresponds to future utilization (e.g., a number of flight cycles, flight legs, operation hours, etc.) and environments (e.g., ambient temperature ranges of 25-40 degrees Celsius, salt atmosphere percentage ranges of 15-35%, etc.) to be endured by the engine 102 in future operations.

For example, the health quantifier generator 410 can calculate the projected AHQ for the booster compressor 114 by calculating a change in the actual AHQ over time based on the forecast utilization and environment plan 460. For example, the health quantifier generator 410 can calculate a projected AHQ of 30% for the booster compressor 114 based on an actual AHQ of 70% for the booster compressor 114 and executing the models 450, 452, 454, 456 for an additional 500 flight cycles in a geographic region in which ambient temperatures range from 25-40 degrees Celsius and salt atmosphere percentages range of 15-35%.

In some examples, the health quantifier generator 410 calculates a projected AHQ of an asset component based on a projected AHQ of sub-components of the asset component. For example, the health quantifier generator 410 can calculate a projected AHQ for the fan section 108 of FIG. 1 based on calculating a projected AHQ for sub-components of the fan section 108 based on the model inputs 335. For example, the health quantifier generator 410 can calculate a projected AHQ of sub-components such as a fan blade, a bearing, a speed sensor, etc., of the fan section 108 by executing the physics-based model 452 of the engine 102. In such an example, the health quantifier generator 410 can generate a projected AHQ of the fan section 108 based on calculating an average (e.g., a weighted average, etc.) of the projected AHQ of the fan blade, the bearing, the speed sensor, etc., of the fan section 108. In some examples, the health quantifier generator 410 can rank the projected AHQ of the asset components (e.g., the fan section 108, the booster compressor 114, etc.) in an ascending order, a descending order, by criticality (e.g., a quantitative measure of how critical an asset component is to a function of the engine 102, etc.), etc.

In some examples, the health quantifier generator 410 deploys an automated (e.g., an unmanned, a computer-operated, etc.) imaging system to inspect the engine 102 to generate an AHQ. For example, the health quantifier generator 410 can use an imaging system including one or more cameras (e.g., digital cameras, video cameras, etc.) to capture one or more images of an asset component of the engine 102. For example, the health quantifier generator 410 can use an object-recognition system (e.g., a machine-learning system, a deep-learning system, etc.) to compare an image of the booster compressor 114 of FIG. 1 to an image in an object-recognition database. In some examples, the object-recognition system compares the images using an appearance-based method such as divide-and-conquer search, edge matching, greyscale matching, gradient matching, etc. In some examples, the object-recognition system compares the images using a feature-based method.

In some examples, the health quantifier generator 410 calculates an AHQ of the booster compressor 114 based on the comparison of an image of the booster compressor 114 captured during an inspection process, a real-time operation, a maintenance period, etc., to an image stored in the object-recognition database. For example, the health quantifier generator 410 can determine an AHQ of the booster compressor 114 by matching a captured image (e.g., matching a captured image within a specified object-recognition tolerance, etc.) of the booster compressor 114 with an unknown AHQ to an image stored in the object-recognition database with a known AHQ, and determining the AHQ based on the match.

In the illustrated example of FIG. 4, the asset health calculator 300 includes the removal scheduler 420 to identify one or more candidate assets for removal from service and generate a removal schedule based on the one or more identified candidate assets. In some examples, the removal scheduler 420 identifies a first set of candidate assets including one or more assets as candidate(s) for removal based on comparing an AHQ (e.g., an actual AHQ, a projected AHQ, etc.) of an asset (e.g., the engine 102) to a threshold (e.g., an AHQ threshold, a maintenance threshold, a removal threshold, etc.) and determining whether the AHQ satisfies the threshold based on the comparison.

In some examples, the removal scheduler 420 identifies a second set of candidate assets including one or more assets as candidate(s) for removal based on non-asset monitoring information obtained from the database 345. For example, the removal scheduler 420 can identify the engine 102 for removal based on a time interval between maintenance tasks specified in a contract, customer technical forecast information, customer spare part information, etc., for the engine 102.

In some examples, the removal scheduler 420 compares candidate assets in the first set to the second set. In some examples, the removal scheduler 420 identifies target assets for removal based on the comparison. In some examples, the removal scheduler 420 generates a removal schedule for the identified target assets. For example, the removal scheduler 420 can determine that the identified target assets correspond to one contract or more than one contract. For example, in response to determining that the target assets correspond to one contract, the removal scheduler 420 can generate an optimal and/or otherwise improved removal schedule of the target assets based on performing an optimization/improvement process such as an iterated local search.

In another example, in response to determining that the target assets correspond to more than one contract, the removal scheduler 420 can generate a removal schedule for the target assets using methods such as single level optimization, top-down optimization, bottom-up optimization, etc., and/or a combination thereof. For example, the removal scheduler 420 can generate a removal schedule using single level optimization by optimizing and/or otherwise improving each asset corresponding to each contract simultaneously (or substantially simultaneously given data processing, transmission, and storage latency).

In another example, the removal scheduler 420 can generate a removal schedule using top-down optimization. For example, the "top" in the top-down optimization can correspond to a maintenance facility and the "down" in the top-down optimization can correspond to an operator contract. For example, top-down optimization can include generating a removal schedule where slots in a maintenance facility work flow are given priority and assets included in contracts to fill the slots are re-arranged to fit the constraints of the maintenance facility. For example, the removal scheduler 420 can generate the removal schedule using top-down optimization by generating a high-level, top-level, etc., target removal schedule for each contract, generating a candidate removal schedule for each contract, and generating an optimized and/or otherwise improved removal schedule for the contracts based on the comparison of the target removal schedules to the candidate removal schedules.

In another example, the removal scheduler 420 can generate a removal schedule using bottom-up optimization. For example, the "bottom" in the bottom-up optimization can correspond to an operator contract and the "up" in the bottom-up optimization can correspond to a maintenance facility. For example, bottom-up optimization can include generating a removal schedule where assets included in contracts are given priority and slots in a maintenance facility work flow are re-arranged to fit the constraints of the contracts. For example, the removal scheduler 420 can generate the removal schedule using bottom-up optimization by generating candidate removal schedules for each contract, combining the candidate removal schedules, and re-adjusting the candidate removal schedules to help ensure global feasibility with respect to one or more factors such as customer constraints, maintenance facility constraints, spare part availability constraints, etc., and/or a combination thereof.

In the illustrated example of FIG. 4, the health quantifier generator 410 and/or the removal scheduler 420 generate outputs 470. In some examples, the outputs 470 include AHQ (e.g., actual AHQ, projected AHQ, etc.) of an asset (e.g., the engine 102, etc.), an asset component (e.g., the fan section 108, the booster compressor 114, etc.), etc. In some examples, the outputs 470 include a removal schedule of one or more assets including corresponding removal schedule information (e.g., maintenance logistic information, service logistic information, etc.). For example, the outputs 470 can include a removal schedule of the engine 102 including a maintenance facility in which the engine 102 can be serviced and a timeline in which the engine 102 can be removed, serviced, and re-deployed.

While an example implementation of the asset health calculator 300 of FIG. 3 is illustrated in FIG. 4, one or more of the elements, processes and/or devices illustrated in FIG. 4 may be combined, divided, re-arranged, omitted, eliminated and/or implemented in any other way. Further, the example collection engine 400, the example health quantifier calculator 410, the example removal scheduler 420, and/or, more generally, the example asset health calculator 300 of FIG. 3 may be implemented by hardware, software, firmware and/or any combination of hardware, software and/or firmware. Thus, for example, any of the example collection engine 400, the example health quantifier calculator 410, the example removal scheduler 420 and/or, more generally, the example asset health calculator 300 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example collection engine 400, the example health quantifier generator 410, and/or the example removal scheduler 420 is/are hereby expressly defined to include a non-transitory computer readable storage device or storage disk such as a memory, a digital versatile disk (DVD), a compact disk (CD), a Blu-ray disk, etc. including the software and/or firmware. Further still, the example asset health calculator 300 of FIG. 3 may include one or more elements, processes and/or devices in addition to, or instead of, those illustrated in FIG. 4, and/or may include more than one of any or all of the illustrated elements, processes and devices.

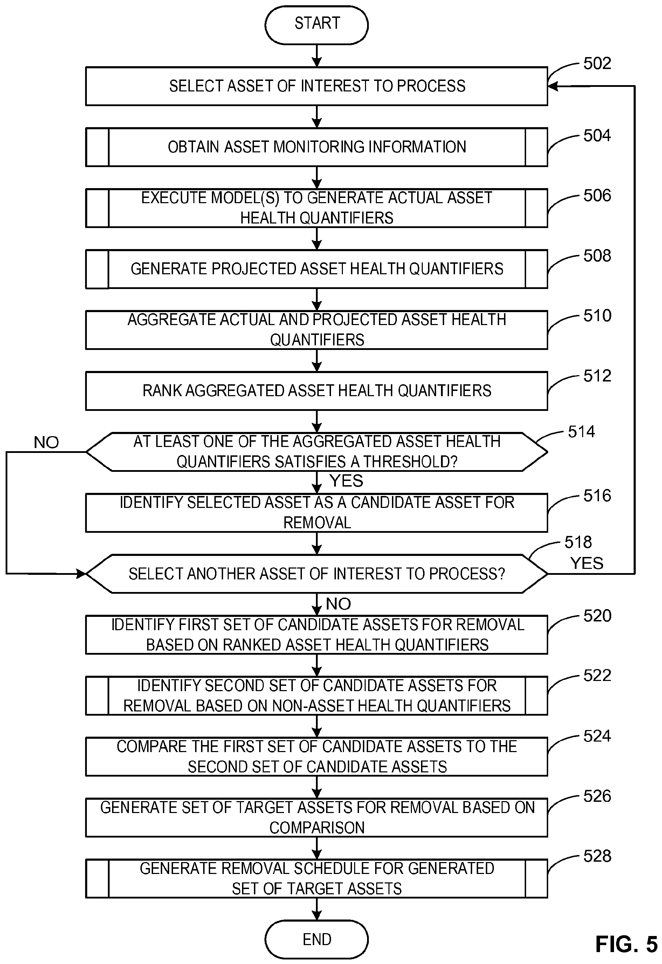

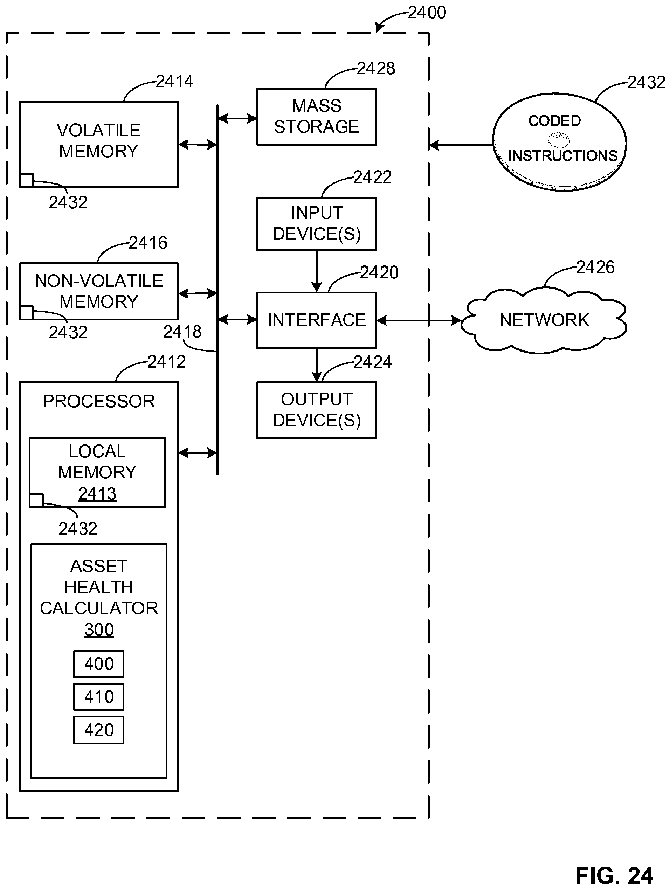

Flowcharts representative of example machine readable instructions for implementing the asset health calculator 300 of FIGS. 3-4 are shown in FIGS. 5-16. In these examples, the machine readable instructions comprise a program for execution by a processor such as a processor 2412 shown in the example processor platform 2400 discussed below in connection with FIG. 24. The program may be embodied in software stored on a non-transitory computer readable storage medium such as a CD-ROM, a floppy disk, a hard drive, a DVD, a Blu-ray disk, or a memory associated with the processor 2412, but the entire program and/or parts thereof could alternatively be executed by a device other than the processor 2412 and/or embodied in firmware or dedicated hardware. Further, although the example program is described with reference to the flowcharts illustrated in FIGS. 5-16, many other methods of implementing the example asset health calculator 300 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, a Field Programmable Gate Array (FPGA), an Application Specific Integrated circuit (ASIC), a comparator, an operational-amplifier (op-amp), a logic circuit, etc.) structured to perform the corresponding operation without executing software or firmware.

As mentioned above, the example processes of FIGS. 5-16 may be implemented using coded instructions (e.g., computer and/or machine readable instructions) stored on a non-transitory computer and/or machine readable medium such as a hard disk drive, a flash memory, a read-only memory, a CD, a DVD, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. "Including" and "comprising" (and all forms and tenses thereof) are used herein to be open ended terms. Thus, whenever a claim lists anything following any form of "include" or "comprise" (e.g., comprises, includes, comprising, including, etc.), it is to be understood that additional elements, terms, etc. may be present without falling outside the scope of the corresponding claim. As used herein, when the phrase "at least" is used as the transition term in a preamble of a claim, it is open ended in the same manner as the term "comprising" and "including" are open ended.

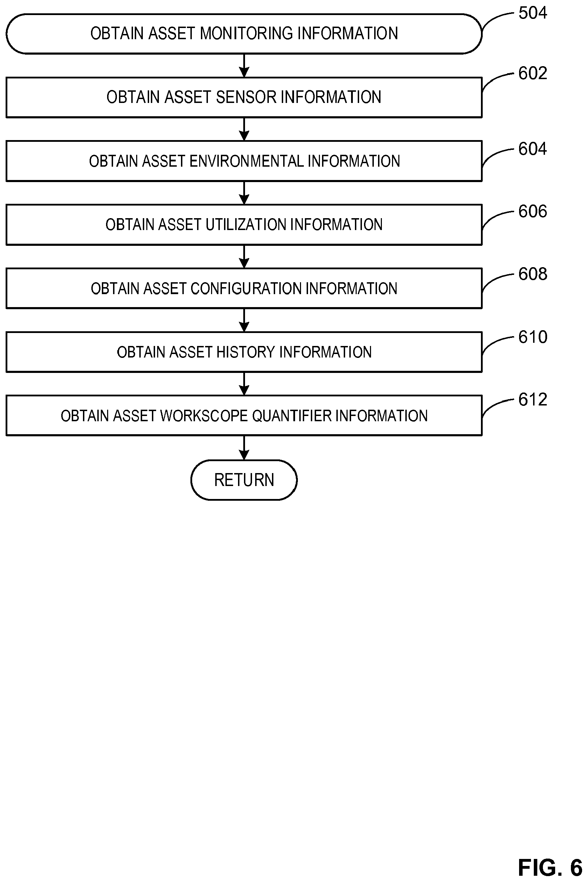

FIG. 5 is a flowchart representative of an example method that can be performed by the example asset health calculator 300 of FIGS. 3-4 to identify one or more target assets for removal and generate a removal schedule of the one or more identified target assets. The example method begins at block 502 at which the example asset health calculator 300 selects an asset of interest to process. For example, the collection engine 400 can select the engine 102 of FIG. 1 to process. At block 504, the example asset health calculator 300 obtains asset monitoring information. For example, the collection engine 400 can obtain the inputs 325 of FIGS. 3-4. An example process that can be used to implement block 504 is described below in connection with FIG. 6.

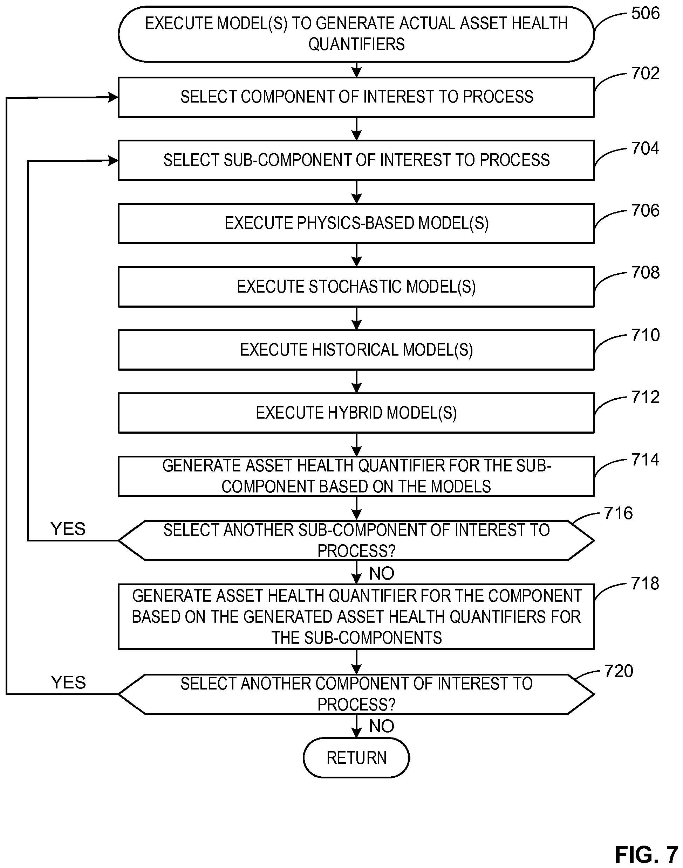

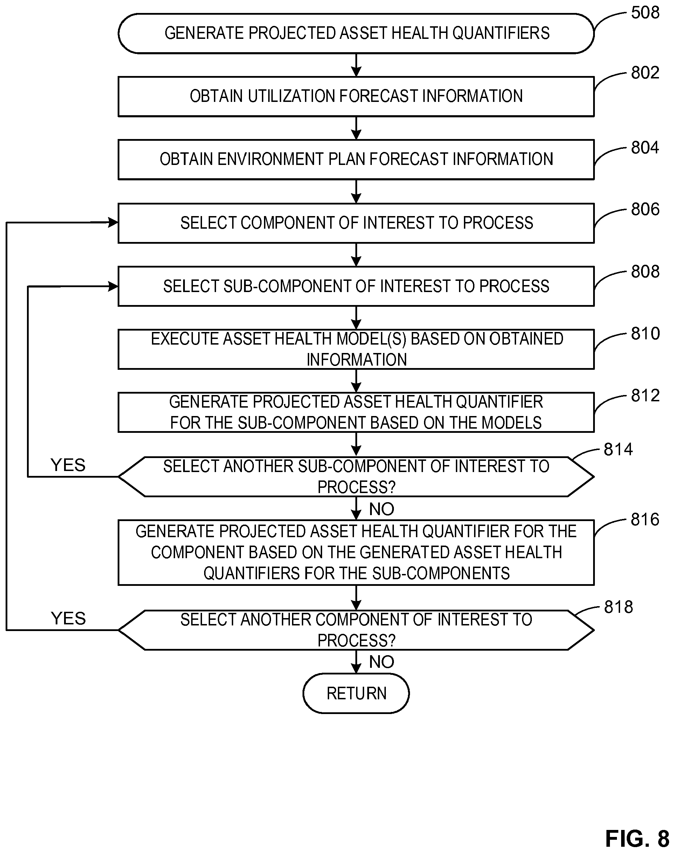

At block 506, the example asset health calculator 300 executes model(s) to generate actual asset health quantifiers. For example, the health quantifier generator 410 can generate an actual AHQ of the engine 102, the booster compressor 114 of the engine 102, etc. An example process that can be used to implement block 506 is described below in connection with FIG. 7. At block 508, the example asset health calculator 300 generates projected asset health quantifiers. For example, the health quantifier generator 410 can generate a projected AHQ of the engine 102, the booster compressor 114 of the engine 102, etc. An example process that can be used to implement block 508 is described below in connection with FIG. 8.

At block 510, the example asset health calculator 300 aggregates actual and projected asset health quantifiers. For example, the health quantifier generator 410 can aggregate a plurality of the actual and the projected AHQ for the engine 102. At block 512, the example asset health calculator 300 can rank the aggregated asset health quantifiers. For example, the health quantifier generator 410 can rank the plurality of the actual and the projected AHQ for the engine 102.

At block 514, the example asset health calculator 300 determines whether at least one of the aggregated asset health quantifiers satisfies a threshold. For example, the removal scheduler 420 can compare an actual AHQ of 75% of the booster compressor 114 to an actual AHQ threshold of 80%. In such an example, the removal scheduler 420 can determine that the actual AHQ satisfies the actual AHQ threshold based on the actual AHQ being less than the AHQ threshold.

If, at block 514, the example asset health calculator 300 determines that at least one of the aggregated asset health quantifiers does not satisfy a threshold, control proceeds to block 518 to determine whether to select another asset of interest to process. If, at block 514, the example asset health calculator 300 determines that at least one of the aggregated asset health quantifiers satisfies a threshold, then, at block 516, the asset health calculator 300 identifies the selected asset as a candidate asset for removal. For example, the removal scheduler 420 can identify the engine 102 as a candidate asset for removal from service and add the engine 102 to a set of candidate assets identified for removal based on the ranked asset health quantifiers.

At block 518, the example asset health calculator 300 determines whether to select another asset of interest to process. For example, the collection engine 400 can determine that there is another turbine engine of interest to process. If, at block 518, the example asset health calculator 300 determines to select another asset of interest to process, control returns to block 502 to select another asset of interest to process. If, at block 518, the example asset health calculator 300 determines not to select another asset of interest to process, then, at block 520, the asset health calculator 300 identifies a first set of candidate assets for removal based on ranked asset health quantifiers. For example, the removal scheduler 420 can identify the set of candidate assets for removal including the engine 102 based on one or more AHQ (e.g., ranked AHQ, etc.) of the engine 102.

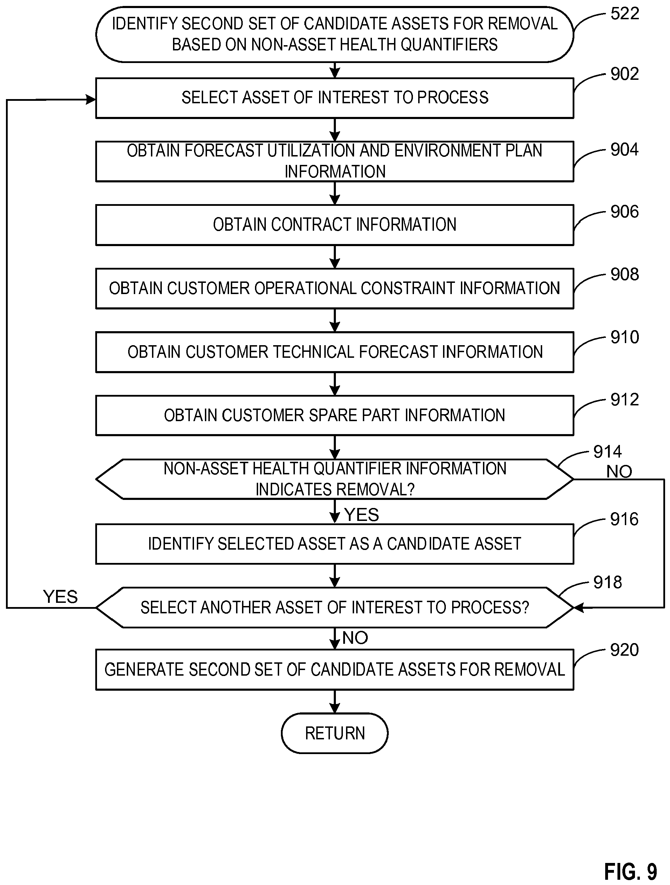

At block 522, the example asset health calculator 300 identifies a second set of candidate assets for removal based on non-asset health quantifiers. For example, the removal scheduler 420 can identify a set of candidate assets for removal based on non-asset monitoring information such as contractual requirements. An example process that can be used to implement block 522 is described below in connection with FIG. 9. At block 524, the example asset health calculator 300 compares the first set of candidate assets to the second set of candidate assets. For example, the removal scheduler 420 can compare assets included in the first set to assets included in the second set to determine if any assets are not included in one set compared to the other set.

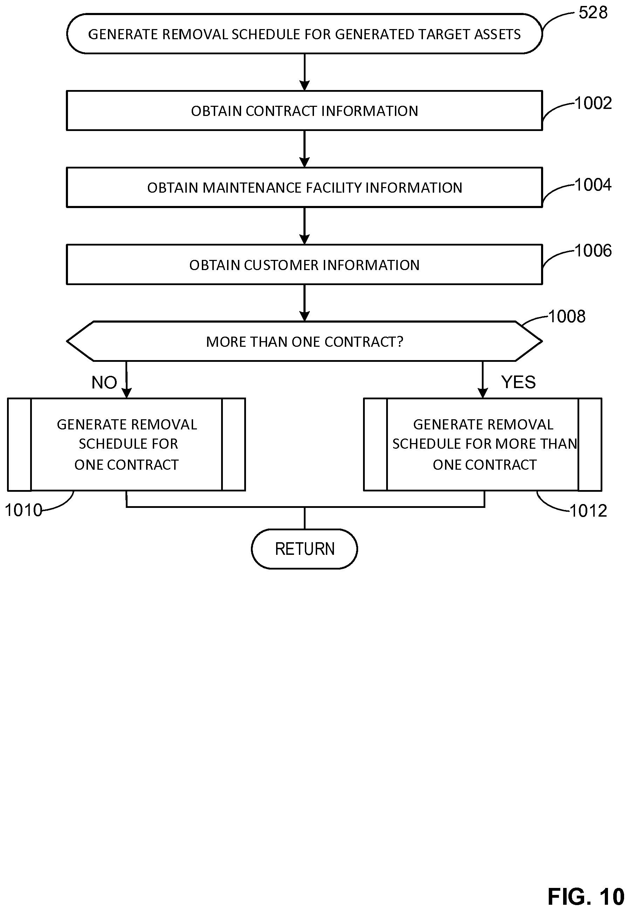

At block 526, the example asset health calculator 300 generates a set of target assets for removal based on the comparison. For example, the removal scheduler 420 can generate a set of target assets including the engine 102 based on the comparison. At block 528, the example asset health calculator 300 generates a removal schedule for the generated set of target assets. For example, the removal scheduler 420 can generate a removal schedule for the engine 102. An example process that can be used to implement block 528 is described below in connection with FIG. 10. In response to generating the removal schedule for the generated set of target assets, the example method concludes.

FIG. 6 is a flowchart representative of an example method that can be performed by the example asset health calculator 300 of FIGS. 3-4 to obtain asset monitoring information. The example process of FIG. 6 can be used to implement the operation of block 504 of FIG. 5. The example method begins at block 602 at which the example asset health calculator 300 obtains asset sensor information. For example, the collection engine 400 can obtain the asset sensor data 430 of FIG. 4.

At block 604, the example asset health calculator 300 obtains asset environmental information. For example, the collection engine 400 can obtain the asset environmental data 432 of FIG. 4. At block 606, the example asset health calculator 300 obtains asset utilization information. For example, the collection engine 400 can obtain the operational/utilization data 434 of FIG. 4.

At block 608, the example asset health calculator 300 obtains asset configuration information. For example, the collection engine 400 can obtain the asset configuration data 436 of FIG. 4. At block 610, the example asset health calculator 300 obtains asset class history information. For example, the collection engine 400 can obtain the asset class history data 438 of FIG. 4. At block 612, the example asset health calculator 300 obtains asset workscope quantifier information. For example, the collection engine 400 can obtain the workscope quantifiers 440 of FIG. 4. In response to obtaining the asset workscope quantifier information, the example method returns to block 506 of the example of FIG. 5 to execute model(s) to generate actual asset health quantifiers.

FIG. 7 is a flowchart representative of an example method that can be performed by the example asset health calculator 300 of FIGS. 3-4 to execute model(s) to generate actual asset health quantifiers. The example process of FIG. 7 can be used to implement the operation of block 506 of FIG. 5. The example method begins at block 702 at which the example asset health calculator 300 selects a component of interest to process. For example, the collection engine 400 can select the fan section 108 of FIG. 1 to process. At block 704, the example asset health calculator 300 selects a sub-component of interest to process. For example, the collection engine 400 can select a fan blade of the fan section 108 to process.

At block 706, the example asset health calculator 300 executes physics-based model(s) with respect to the sub-component of interest. For example, the health quantifier generator 410 can execute the physics-based model 452 of FIG. 4 to simulate an operation of the fan blade of the fan section 108. At block 708, the example asset health calculator 300 executes stochastic model(s) with respect to the sub-component of interest. For example, the health quantifier generator 410 can execute the stochastic model 454 of FIG. 4 to estimate a failure rate of the fan blade of the fan section 108 using a continuous probability distribution. In such an example, the asset health calculator 300 can execute the stochastic model 454 using the asset monitoring information obtained by using the example method of FIG. 6.

At block 710, the example asset health calculator 300 executes historical model(s) with respect to the sub-component of interest. For example, the health quantifier generator 410 can execute the historical data model 450 of FIG. 4 to estimate a failure rate of the fan blade of the fan section 108 using historical data collected for fan blades operating on similar (e.g., substantially similar, etc.) assets as the engine 102. In such an example, the asset health calculator 300 can execute the historical data model 450 using the asset monitoring information obtained by using the example method of FIG. 6

At block 712, the example asset health calculator 300 executes hybrid model(s) with respect to the sub-component of interest. For example, the health quantifier generator 410 can execute the hybrid model 456 to estimate a failure rate of the fan blade of the fan section using the stochastic model 454 and comparing an output of the stochastic model 454 to an output of the physics-based model 452, the historical data model, etc., and/or a combination thereof. In such an example, the asset health calculator 300 can execute the hybrid model 456 using the asset monitoring information obtained by using the example method of FIG. 6

At block 714, the example asset health calculator 300 generates an asset health quantifier for the sub-component. For example, the health quantifier generator 410 can calculate an actual AHQ for the fan blade of the fan section 108 based on the model inputs 335. At block 716, the example asset health calculator 300 determines whether to select another sub-component of interest to process. For example, the collection engine 400 can determine to select a bearing of the fan section 108 to process.

If, at block 716, the example asset health calculator 300 determines to select another sub-component of interest to process, control returns to block 704 to select another sub-component of interest to process. If, at block 716, the example asset health calculator 300 determines not to select another sub-component of interest to process, then, at block 718, the asset health calculator 300 generates an asset health quantifier for the component based on the generated asset health quantifiers for the sub-components. For example, the health quantifier generator 410 can generate an actual AHQ for the fan section 108 based on actual AHQ of the sub-components (e.g., the fan blade, the bearing, etc.) of the fan section 108. In the illustrated example of FIG. 7, the asset health calculator 300 generates the actual AHQ based on executing the models described with respect to blocks 706, 708, 710, and 712. Alternatively, the example asset health calculator 300 can generate the actual AHQ based on executing one or fewer models than the models described with respect to blocks 706, 708, 710, and 712.

At block 720, the example asset health calculator 300 determines whether to select another component of interest to process. For example, collection engine 400 can determine to select the booster compressor 114 of FIG. 1 to process. If, at block 720, the example asset health calculator 300 determines to select another component of interest to process, control returns to block 702 to select another component of interest to process, otherwise the example method returns to block 508 of the example of FIG. 5 to generate projected asset health quantifiers.

FIG. 8 is a flowchart representative of an example method that can be performed by the example asset health calculator 300 of FIGS. 3-4 to generate projected asset health quantifiers. The example process of FIG. 8 can be used to implement the operation of block 508 of FIG. 5. The example method begins at block 802 at which the example asset health calculator 300 obtains utilization forecast information. For example, the collection engine 400 can obtain the forecast utilization and environment plan 460 of FIG. 4 for the engine 102.

At block 804, the example asset health calculator 300 obtains environment plan forecast information. For example, the collection engine 400 can obtain the forecast utilization and environment plan 460 for the engine 102. At block 806, the example asset health calculator 300 selects a component of interest to process. For example, the collection engine 400 can select the fan section 108 of FIG. 1 to process.

At block 808, the example asset health calculator 300 selects a sub-component of interest to process. For example, the collection engine 400 can select a fan blade of the fan section 108 to process. At block 810, the example asset health calculator 300 executes asset health model(s) based on obtained information. For example, the health quantifier generator 410 can execute one or more of the historical data model 450, the physics-based model 452, the stochastic model 454, the hybrid model 456, etc., using the forecast utilization and environment plan 460 for the engine 102.

At block 812, the example asset health calculator 300 generates a projected asset health quantifier for the sub-component based on the models. For example, the health quantifier generator 410 can generate a projected asset health quantifier for the fan blade of the fan section 108 based on executing one or more of the models 450, 452, 454, 456 of FIG. 4. At block 814, the example asset health calculator 300 determines whether to select another sub-component of interest to process. For example, the collection engine 400 can determine to select a bearing of the fan section 108 to process. For example, the collection engine 400 can determine to select the bearing of the fan section 108 based on comparing the fan section 108 to a configuration file, a part list, etc., in the database 345 of FIGS. 3-4. For example, the collection engine 400 can map the fan section 108 to the configuration file and determine a list of components included in the fan section 108 based on the mapping. For example, the collection engine 400 can determine whether the bearing has not been processed based on comparing components of the fan section 108 already processed to components defined in the configuration file, the part list, etc., for the fan section 108 that has not been processed.

If, at block 814, the example asset health calculator 300 determines to select another sub-component of interest to process, control returns to block 808 to select another sub-component of interest to process. If, at block 814, the example asset health calculator 300 determines not to select another sub-component of interest to process, then, at block 816, the asset health calculator 300 generates a projected asset health quantifier for the component based on the generated asset health quantifiers for the sub-components. For example, the health quantifier generator 410 can generate a projected AHQ for the fan section 108 based on projected AHQ of the sub-components (e.g., the fan blade, the bearing, etc.) of the fan section 108.

At block 818, the example asset health calculator 300 determines whether to select another component of interest to process. For example, the collection engine 400 can determine to process the low-pressure turbine 124 of FIG. 1. If, at block 818, the example asset health calculator 300 determines to select another component of interest to process, control returns to block 806 to select another component of interest to process, otherwise the example method returns to block 510 of the example of FIG. 5 to aggregate actual and projected asset health quantifiers.

FIG. 9 is a flowchart representative of an example method that can be performed by the example asset health calculator 300 of FIGS. 3-4 to identify a second set of candidate assets for removal based on non-asset health quantifiers. The example process of FIG. 9 can be used to implement the operation of block 522 of FIG. 5. The example method begins at block 902 at which the example asset health calculator 300 selects an asset of interest to process. For example, the collection engine 400 can select the engine 102 of FIG. 1 to process.

At block 904, the example asset health calculator 300 obtains forecast utilization and environment plan information. For example, the collection engine 400 can obtain the forecast utilization and environment plan 460 of FIG. 4 for the engine 102. At block 906, the example asset health calculator 300 obtains contract information. For example, the collection engine 400 can obtain contract information corresponding to the engine 102 from the database 345 of FIGS. 3-4. In such an example, the contract information can include information such as time intervals between service, whether to replace or refurbish a component of the engine 102, etc.

At block 908, the example asset health calculator 300 obtains customer operational constraint information. For example, the collection engine 400 can obtain information from the database 345 such as how many assets can be out of service during a time period for a customer, how many service locations are accessible by the customer, etc. At block 910, the example asset health calculator 300 obtains customer technical forecast information. For example, the collection engine 400 can obtain information from the database 345 such as a number of expected flight cycles to be completed by the customer, a number of assets to be serviced, a time-on-wing metric (e.g., a target goal of 90% of a useful life of an asset is on-wing of an aircraft), etc.

At block 912, the example asset health calculator 300 obtains customer spare part information. For example, the collection engine 400 can obtain information from the database 345 such as a number of spare components (e.g., a number of spares of the booster compressor 114, the high-pressure turbine 120, etc.) the customer has in inventory.

At block 914, the example asset health calculator 300 determines whether the non-asset health quantifier information indicates removal. For example, the health quantifier generator 410 can identify the engine 102 as a candidate asset for removal based on the forecast utilization and environment plan 460, contractual information, customer spare part information, etc.

If, at block 914, the example asset health calculator 300 determines that the non-asset health quantifier information does not indicate removal, control proceeds to block 918 to determine whether to select another asset of interest to process. If, at block 914, the example asset health calculator 300 determines that the non-asset health quantifier information indicates removal, then, at block 916, the asset health calculator 300 identifies the selected asset as a candidate asset. For example, the health quantifier generator 410 can identify the engine 102 as a candidate asset for removal based on the engine 102 elapsing a time interval between service intervals as specified in a contract.

At block 918, the example asset health calculator 300 determines whether to select another asset of interest to process. For example, the collection engine 400 can determine to select another turbine engine of interest to process. If, at block 918, the example collection engine 400 determines to select another asset of interest to process, control returns to block 902 to select another asset of interest to process. If, at block 918, the example collection engine 400 determines not to select another asset of interest to process, then, at block 920, the asset health calculator 300 generates a second set of candidate assets for removal. For example, the health quantifier generator 410 can generate a second set of candidate assets for removal including the engine 102 based on non-AHQ information. In response, to generating the second set of candidate assets for removal, the example method returns to block 524 of the example of FIG. 5 to compare the first set of candidate assets to the second set of candidate assets.

FIG. 10 is a flowchart representative of an example method that can be performed by the example asset health calculator 300 of FIGS. 3-4 to generate a removal schedule for generated target assets. The example process of FIG. 10 can be used to implement the operation of block 528 of FIG. 5. The example method begins at block 1002 at which the example asset health calculator 300 obtains contract information. For example, the collection engine 400 can collect contract information corresponding to target assets for removal such as the engine 102 of FIG. 1.

At block 1004, the example asset health calculator 300 obtains maintenance facility information. For example, the removal scheduler 420 can obtain information from the database 345 of FIGS. 3-4 such as a number of maintenance facilities capable of servicing the engine 102, a number of maintenance personnel and corresponding skill-sets at a maintenance facility, etc.

At block 1006, the example asset health calculator 300 obtains customer information. For example, the collection engine 400 can obtain information from the database 345 such as the capacity of the customer to remove a number of assets (e.g., turbine engines, etc.) during a certain period of time. At block 1008, the example asset health calculator 300 determines whether there more than one contract corresponding to the generated target assets. For example, the removal scheduler 420 can determine that there are two contracts corresponding to eight assets identified for removal.

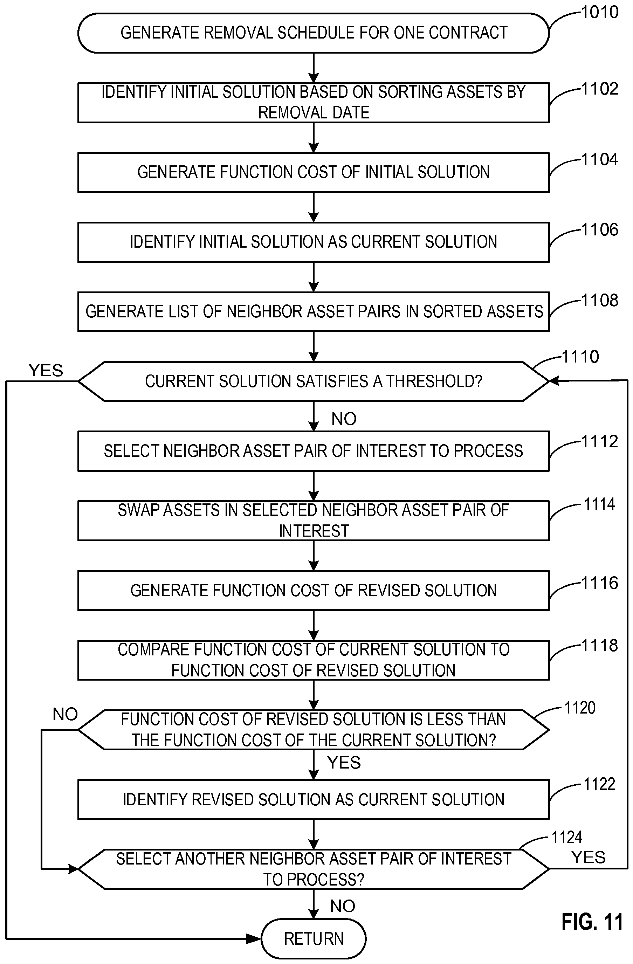

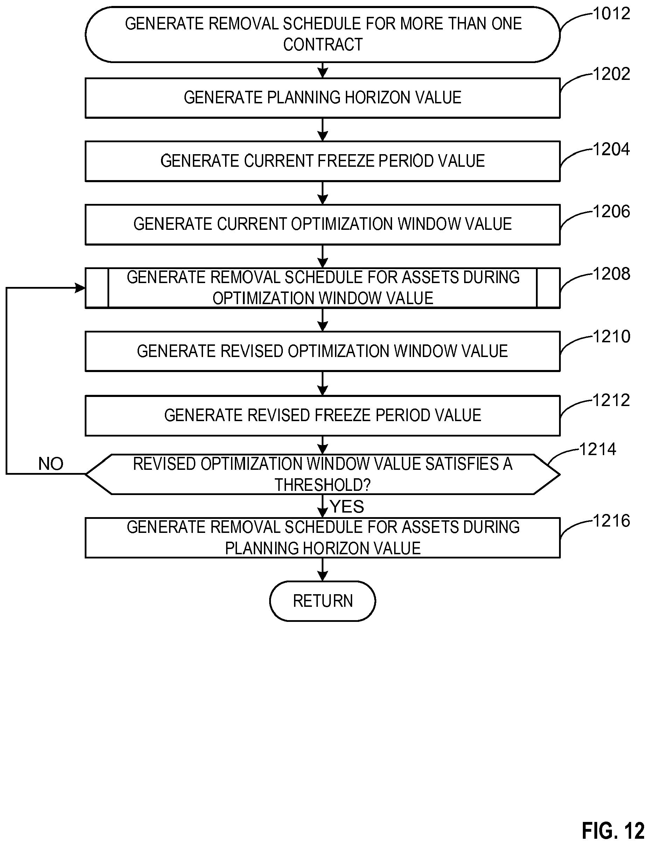

If, at block 1008, the example asset health calculator 300 determines that there is not more than one contract, control proceeds to block 1010 to generate a removal schedule for one contract. An example process that can be used to implement block 1010 is described below in connection with FIG. 11. If, at block 1008, the example asset health calculator 300 determines that there is more than one contract, control proceeds to block 1012 to generate a removal schedule for more than one contract. An example process that can be used to implement block 1012 is described below in connection with FIG. 12. In response to generating a removal schedule for one contract or in response to generating a removal schedule for more than one contract, control returns to the example of FIG. 5 to conclude.

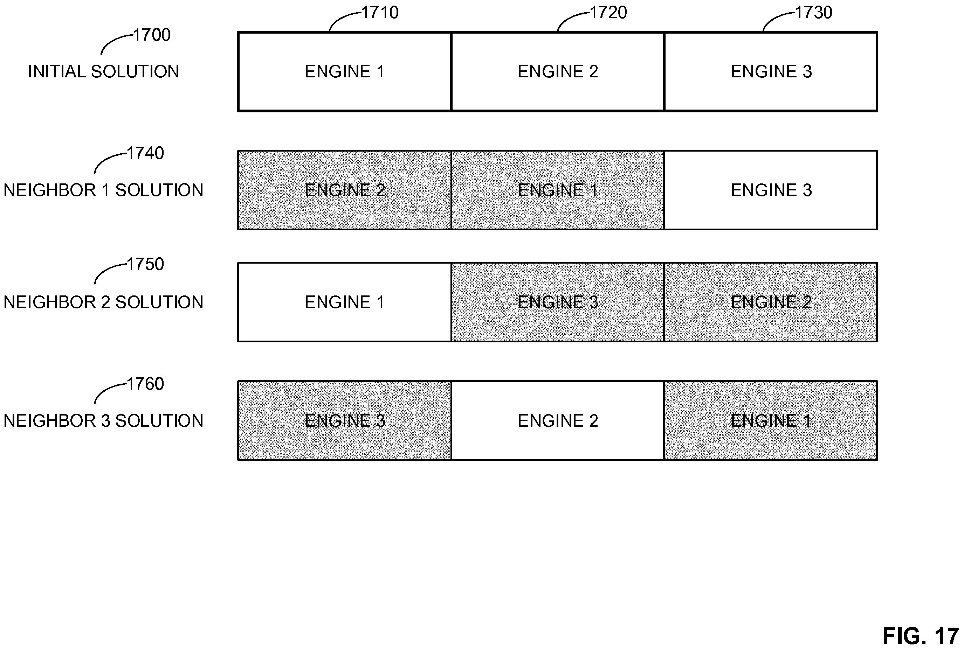

FIG. 11 is a flowchart representative of an example method that can be performed by the example asset health calculator 300 of FIGS. 3-4 to generate a removal schedule for one contract based on an iterated local search. The example process of FIG. 11 can be used to implement the operation of block 1010 of FIG. 10. The example method begins at block 1102 at which the example asset health calculator 300 identifies an initial solution based on sorting assets by removal date. For example, the removal scheduler 420 identifies an initial solution 1700 of FIG. 17 as the initial solution, where the initial solution includes generating a slot order based on dates included in a Technical Product Plan (TPP) (e.g., contract removal dates, etc.). The example TPP can include a schedule of asset removals based on programmatic, contractual, and technical triggers. In such an example, the removal scheduler 420 sorts engine 1 1710, engine 2 1720, and engine 3 1730 based on removal date. For example, the removal scheduler 420 can generate a removal date of the engines 1710, 1720, 1730 based on actual AHQ, projected AHQ, non-AHQ information, etc., of the engines 1710, 1720, 1730. For example, the engine 1 1710 can have an earlier removal date than the engine 2 1720 based on the engine 1 1710 having an actual AHQ less than the actual AHQ of the engine 2 1720. In another example, the engine 1 1710 can have an earlier removal date than the engine 2 1720 based on the engine 1 1710 having a contract requirement to remove the engine 1 1710 by a specified date.

At block 1104, the example asset health calculator 300 generates a function cost of the initial solution. For example, a function cost can correspond to a monetary cost of performing maintenance on the assets in an order as outlined in the initial solution 1700 of FIG. 17. For example, the removal scheduler 420 can generate the function cost of the initial solution 1700 of FIG. 17 by calculating a cost of performing maintenance on engine 1 1710, engine 2 1720, and engine 3 1730 of FIG. 17 in order where the cost is based on contractual requirements, an amount of money an operator paid a turbine engine maintenance provider prior to the maintenance of the engines 1-3 1710, 1720, 1730, etc. For example, the function cost of the initial solution 1700 of FIG. 17 can correspond to an output of a probabilistic function that based on inputs including an anticipated maintenance cost for the engines 1-3 1710, 1720, 1730 over the life of a contract governing the engines 1-3 1710, 1720, 1730, revenue generated over the life of the contract, an operating margin corresponding to the contract, etc. At block 1106, the example asset health calculator 300 identifies the initial solution as a current solution. For example, the removal scheduler 420 can identify the initial solution 1700 of FIG. 17 as the current solution.

At block 1108, the example asset health calculator 300 generates a list of neighbor asset pairs in the sorted assets. For example, the removal scheduler 420 can identify (1) the engine 1 1710 and the engine 2 1720 of FIG. 17 as a first neighbor asset pair, (2) the engine 2 1720 and the engine 3 1730 of FIG. 17 as a second neighbor asset pair, and (3) the engine 1 1710 and the engine 3 1730 of FIG. 17 as a third neighbor asset pair. At block 1110, the example asset health calculator 300 determines whether the current solution satisfies a threshold. For example, the removal scheduler 420 can compare the function cost of $80,000 of the current solution to a function cost threshold of $100,000 and determine that the function cost of the current solution satisfies the function cost threshold based on the comparison. In such an example, the function cost of the current solution satisfies the function cost threshold based on the function cost being less than the function cost threshold. For example, the removal scheduler 420 can determine whether the current solution has a function cost that minimizes and/or otherwise reduces a cost (e.g., a monetary cost, a labor cost, a utilization cost, etc.) absorbed or internally financed by the turbine engine maintenance provider.

In some examples, the threshold is a computation time limit threshold, a rate of change of slope, etc. For example, the removal scheduler 420 can compare a total elapsed time (e.g., 100 milliseconds, 5 seconds, etc.) of the method of FIG. 11 to a computation time limit threshold (e.g., 200 milliseconds, 10 seconds, etc.) and determine that the total elapsed time satisfies the computation limit threshold based on the comparison. In another example, the removal scheduler 420 can compare a time elapsed since the last solution improvement (e.g., 100 milliseconds, 5 seconds, etc.) to the computation time limit threshold and determine that the time elapsed satisfies the computation limit threshold based on the comparison. In yet another example, the removal scheduler 420 compares a rate of change of slope over previous recent improvements to a slope threshold and determine that the rate of change of slope satisfies the slope threshold based on the comparison.

If, at block 1110, the example asset health calculator 300 determines that the current solution satisfies the threshold, control proceeds to return to the example of FIG. 10 to return to the example of FIG. 5 to conclude. If, at block 1110, the example asset health calculator 300 determines that the current solution does not satisfy the threshold, then, at block 1112, the asset health calculator 300 selects a neighbor asset pair of interest to process. For example, the removal scheduler 420 can identify the first neighbor pair (e.g., the engine 1 1710 and the engine 2 1720, etc.) to process.

At block 1114, the example asset health calculator 300 swaps the assets in the selected neighbor asset pair of interest. For example, the removal scheduler 420 can swap the engine 1 1710 and the engine 2 1720 of FIG. 17 as depicted in the neighbor 1 solution 1740 of FIG. 17. At block 1116, the example asset health calculator 300 generates a function cost of the revised solution. For example, the removal scheduler 420 can generate a function cost of the neighbor 1 solution 1740 of FIG. 17.

At block 1118, the example asset health calculator 300 compares the function cost of the revised solution to the function cost of the current solution. For example, the removal scheduler 420 can compare the function cost of the neighbor 1 solution 1740 of FIG. 17 to the function cost of the initial solution 1700 of FIG. 17. At block 1120, the example asset health calculator 300 determines whether the function cost of the revised solution is less than the function cost of the current solution. For example, the removal scheduler 420 can determine that the function cost of the neighbor 1 solution 1740 of FIG. 17 is less than the function cost of the initial solution 1700 of FIG. 17 and, thus, indicating that the neighbor 1 solution 1740 is an improvement over the initial solution 1700.

If, at block 1120, the example asset health calculator 300 determines that the function cost of the revised solution is not less than the function cost of the current solution, control proceeds to block 1124 to select another asset of interest to process. If, at block 1120, the example asset health calculator 300 determines that the function cost of the revised solution is less than the function cost of the current solution, then, at block 1122, the asset health calculator 300 identifies the revised solution as the current solution. For example, the removal scheduler 420 can identify the neighbor 1 solution 1740 of FIG. 17 as the current solution.

At block 1124, the example asset health calculator 300 determines whether to select another neighbor asset pair of interest to process. For example, the removal scheduler 420 can select the second neighbor asset pair, the third neighbor asset pair, etc., to process. If, at block 1124, the example asset health calculator 300 determines to select another neighbor asset pair of interest to process, control returns to block 1110 to determine whether the current solution satisfies the threshold, otherwise the example method returns to the example of FIG. 10 to return to the example of FIG. 5 to conclude.

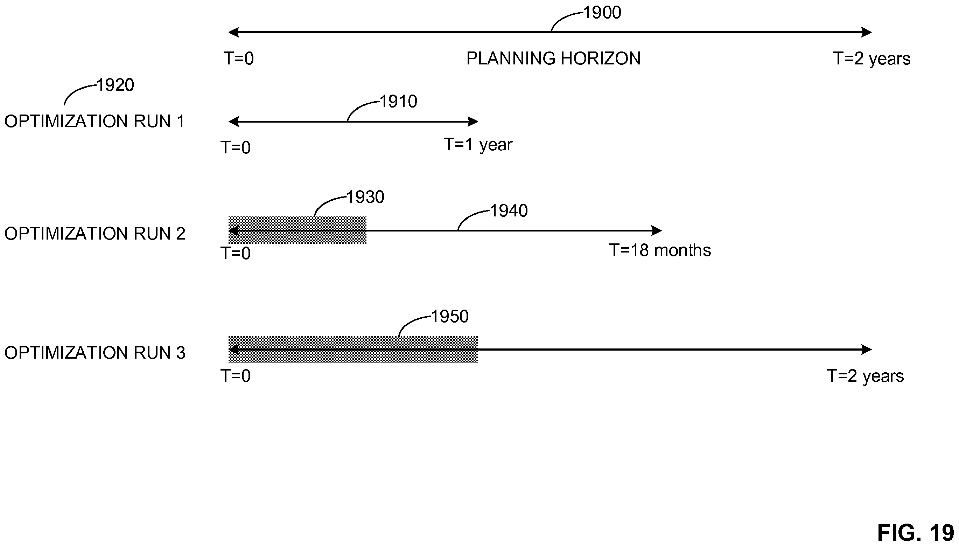

FIG. 12 is a flowchart representative of an example method that can be performed by the example asset health calculator 300 of FIGS. 3-4 to generate a removal schedule for more than one contract by performing integer programming using a myopic optimization method, a rolling optimization method, etc. The example process of FIG. 12 can be used to implement the operation of block 1012 of FIG. 10. The example method begins at block 1202 at which the example asset health calculator 300 generates a planning horizon value. For example, the removal scheduler 420 can generate a planning horizon value 1900, shown in the example of FIG. 19, of two years.

At block 1204, the example asset health calculator 300 generates a current freeze period value. For example, the removal scheduler 420 can generate a current freeze period value 1910 of six months (see FIG. 19). For example, the current freeze period value 1910 can correspond to a freezing of an assignment of assets in an order of a removal schedule. For example, an order of the assets in the removal schedule during the time period of T=0 to T=6 months in FIG. 19 is frozen and cannot be changed further. By freezing the order of the assets in the removal schedule within the current freeze period value 1910 of FIG. 19, the example removal scheduler 420 can help to ensure an avoidance of running out of computing memory when performing the integer programming. At block 1206, the example asset health calculator 300 generates a current optimization window value. For example, the removal scheduler 420 can generate a current optimization window value 1930 of FIG. 19 of one year.

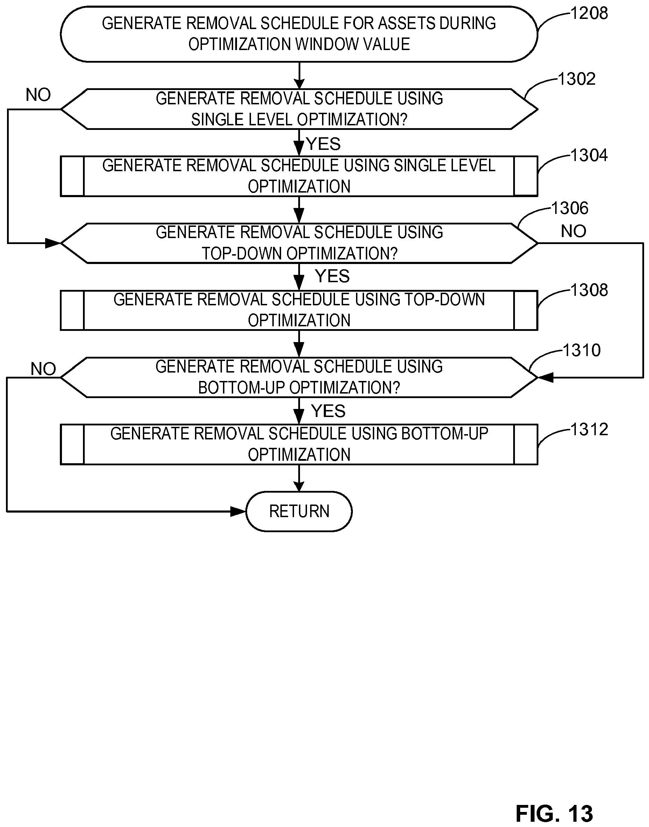

At block 1208, the example asset health calculator 300 generates a removal schedule for assets during the optimization window value during optimization run 1 1920 of FIG. 19. For example, the removal scheduler 420 performs an integer programming based optimization of the removal schedule for the target assets (e.g., the target assets including the engine 102 of FIG. 1, etc.) for a planning period equal to a length of the optimization window value of one year. In such an example, restricting an optimization of the removal schedule during to a length of the optimization window value helps to ensure an avoidance of running out of computing memory when performing the integer programming. An example process that can be used to implement block 1208 is described below in connection with FIG. 13.

At block 1210, the example asset health calculator 300 generates a revised optimization window value. For example, the removal scheduler 420 can increment the current optimization window value 1930 of one year to a revised optimization window value 1940 of 18 months. At block 1212, the example asset health calculator 300 generates a revised freeze period value. For example, the removal scheduler 420 can increment the current freeze period value 1910 of six months to a revised freeze period value 1950 of FIG. 19 of one year.

At block 1214, the example asset health calculator 300 determines whether the revised optimization window value satisfies a threshold. For example, the removal scheduler 420 can compare the revised optimization window value 1940 of 18 months to the planning horizon value 1900 of two years and determine that the revised optimization window value 1940 does not satisfy the threshold based on the comparison (e.g., the revised optimization window value 1940 is less than the planning horizon value 1900, etc.).

If, at block 1214, the example asset health calculator 300 determines that the revised optimization window value does not satisfy the threshold, control returns to block 1208 to generate a removal schedule for assets during the revised optimization window value. If, at block 1214, the example asset health calculator 300 determines that the revised optimization window value satisfies the threshold, then, at block 1216, the asset health calculator 300 generates a removal schedule for the assets during the planning horizon value. For example, the removal scheduler 420 can generate the removal schedule for the assets (e.g., the assets including the engine 102 of FIG. 1, etc.) during the planning horizon value 1900 of FIG. 19. In response to generating the removal schedule for the assets during the planning horizon value, the example method returns to the example of FIG. 10 to return to the example of FIG. 5 to conclude.

FIG. 13 is a flowchart representative of an example method that can be performed by the example asset health calculator 300 of FIGS. 3-4 to generate a removal schedule for assets during an optimization window value. The example process of FIG. 13 can be used to implement the operation of block 1208 of FIG. 12. The example method begins at block 1302 at which the example asset health calculator 300 determines whether to generate a removal schedule using single level optimization. For example, the removal scheduler 420 can determine that a substantial quantity of computing processing resources is available, and a single optimization run can be executed using the computing processing resources.

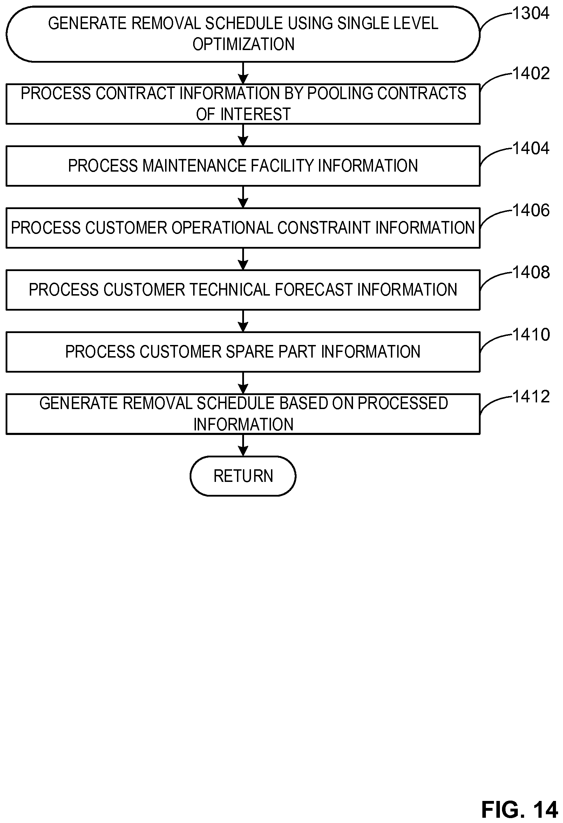

If, at block 1302, the example asset health calculator 300 determines not to generate the removal schedule using single level optimization, control proceeds to block 1306 to determine whether to generate the removal schedule using top-down optimization. If, at block 1302, the example asset health calculator 300 determines to generate the removal schedule using single level optimization, then, at block 1304, the asset health calculator 300 generates the removal schedule using single level optimization. For example, the removal scheduler 420 can generate a removal schedule using single level optimization. For example, the removal scheduler 420 can generate a removal schedule of one or more assets corresponding to one or more contracts by pooling the one or more contracts together and optimizes the removal schedule in response to pooling the one or more contracts together. An example process that can be used to implement block 1304 is described below in connection with FIG. 14.

At block 1306, the example asset health calculator 300 determines whether to generate the removal schedule using top-down optimization. For example, the removal scheduler 420 can determine that maintenance facility constraints are a priority compared to contract-level constraints or operator-level constraints. If, at block 1306, the example asset health calculator 300 determines not to generate the removal schedule using top-down optimization, control proceeds to block 1310 to determine whether to generate the removal schedule using bottom-up optimization.

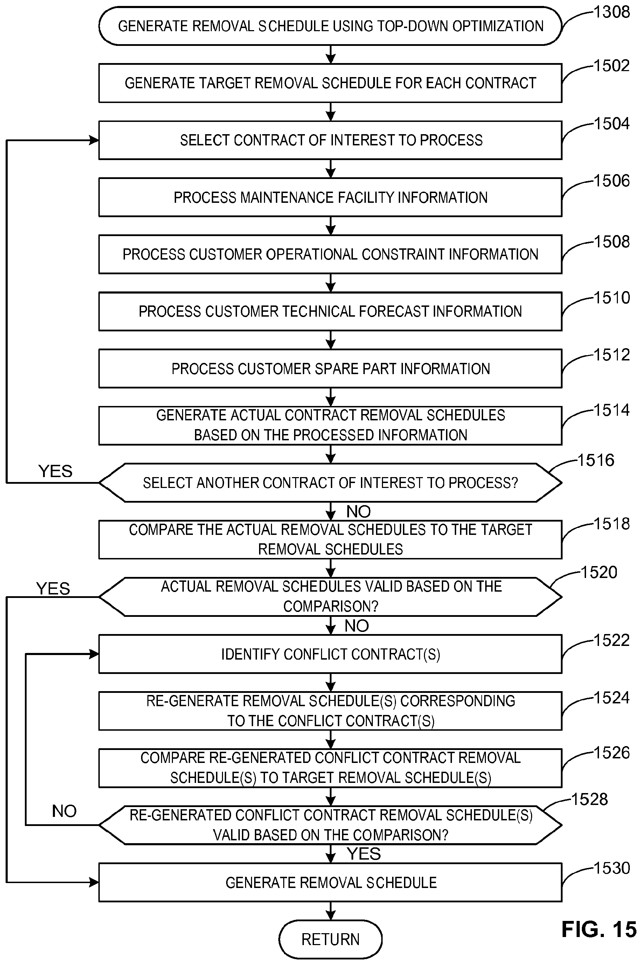

If, at block 1306, the example asset health calculator 300 determines to generate the removal schedule using top-down optimization, then, at block 1308, the asset health calculator 300 generates the removal schedule using top-down optimization. For example, the removal scheduler 420 can generate a removal schedule using top-down optimization. For example, the removal scheduler 420 can generate a removal schedule by generating a high-level, top-level, etc., target removal schedule for each contract based on optimizing around and/or prioritizing maintenance facility constraints, generating a candidate removal schedule for each contract, and generating an optimized and/or otherwise improved removal schedule for the contracts based on the comparison of the target removal schedules to the candidate removal schedules. An example process that can be used to implement block 1308 is described below in connection with FIG. 15.

At block 1310, the example asset health calculator 300 determines whether to generate the removal schedule using bottom-up optimization. For example, the removal scheduler 420 can determine that contract-level constraints or operator-level constraints are a priority compared to maintenance facility constraints. If, at block 1310, the example asset health calculator 300 determines not to generate the removal schedule using bottom-up optimization, the example method returns to block 1210 of the example of FIG. 12 to generate a revised optimization window value.

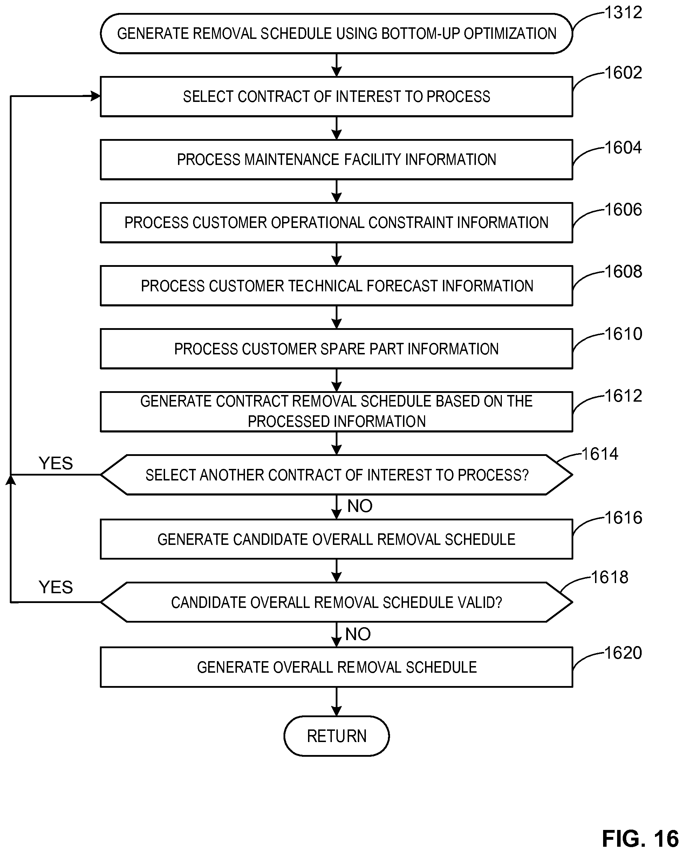

If, at block 1310, the example asset health calculator 300 determines to generate the removal schedule using bottom-up optimization, then, at block 1312, the asset health calculator 300 generates the removal schedule using bottom-up optimization. For example, the removal scheduler 420 can generate candidate removal schedules for each contract based on optimizing around and/or prioritizing contract-level or operator-level constraints, combining the candidate removal schedules, and re-adjusting the candidate removal schedules to help ensure global feasibility with respect to one or more factors such as operator constraints, maintenance facility constraints, spare part availability constraints, etc., and/or a combination thereof. An example process that can be used to implement block 1312 is described below in connection with FIG. 16. In response to generating the removal schedule using bottom-up optimization, the example method returns to block 1210 of the example of FIG. 12 to generate a revised optimization window value.

Although the example method of the example of FIG. 13 depicts generating a removal schedule using one optimization methods such as the single level optimization method, the top-down optimization method, or the bottom-up optimization method, alternatively, the example removal scheduler 420, and/or, more generally, the example asset health calculator 300 can use two or more of the single level optimization method, the top-down optimization method, or the bottom-up optimization method. For example, the removal scheduler 420 can generate a first removal schedule using the top-down optimization method as described in the example of FIG. 15 and can generate a second removal schedule using the bottom-up optimization method as described in the example of FIG. 16. The example removal scheduler 420 can compare the first removal schedule to the second removal schedule and select one of the removal schedules based on the selected removal schedule satisfying one or more maintenance facility constraints, operator constraints, function cost thresholds, etc., and/or a combination thereof.

FIG. 14 is a flowchart representative of an example method that can be performed by the example asset health calculator 300 of FIGS. 3-4 to generate a removal schedule using single level optimization. The example process of FIG. 14 can be used to implement the operation of block 1304 of FIG. 13. The example method begins at block 1402 at which the example asset health calculator 300 processes contract information by pooling contracts of interest. For example, the removal scheduler 420 can obtain the contract information from the database 345 of FIGS. 3-4 corresponding to the assets targeted for removal (e.g., the assets including the engine 102 of FIG. 1).

At block 1404, the example asset health calculator 300 processes maintenance facility information. For example, the removal scheduler 420 can obtain the maintenance facility information (e.g., a number of maintenance facilities, a number of personnel at the maintenance facilities, a current availability of the maintenance facilities, etc.) from the database 345.

At block 1406, the example asset health calculator 300 processes customer operational constraint information. For example, the removal scheduler 420 can obtain the customer operational constraint information (e.g., a number of assets the customer can remove from service during a specified time period, etc.) from the database 345.

At block 1408, the example asset health calculator 300 processes customer technical forecast information. For example, the removal scheduler 420 can obtain the customer technical forecast information (e.g., a time-on-wing metric, a number of flight cycles to be executed by the engine 102, etc.) from the database 345.

At block 1410, the example asset health calculator 300 processes customer spare part information. For example, the removal scheduler 420 can obtain the customer spare part information (e.g., a number of spares for the engine 102, the booster compressor 114, etc.) from the database 345.

At block 1412, the example asset health calculator 300 generates a removal schedule based on the processed information. For example, the removal scheduler 420 can generate a removal schedule based on pooling contracts corresponding to assets targeted for removal, processing the information corresponding to the pooled contracts (e.g., the contract information, the maintenance facility information, etc.), and generating the removal schedule for the assets based on the processed information. In response to generating the removal schedule based on the processed information, the example method returns to block 1306 of the example of FIG. 13 to determine whether to generate the removal schedule using top-down optimization.

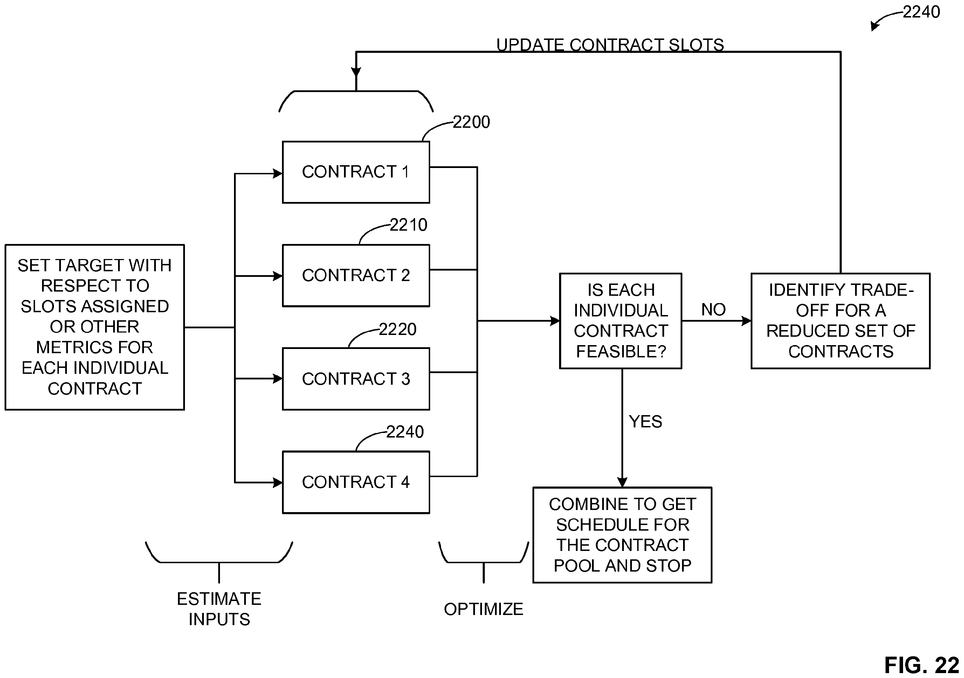

FIG. 15 is a flowchart representative of an example method that can be performed by the example asset health calculator 300 of FIGS. 3-4 to generate a removal schedule using top-down optimization. The example process of FIG. 15 can be used to implement the operation of block 1308 of FIG. 13. The example method begins at block 1502 at which the example asset health calculator 300 generates a target removal schedule for each contract. For example, the removal scheduler 420 can generate a target removal schedule for assets corresponding to contract 1 2200, contract 2 2210, contract 3 2220, and contract 4 2230 of FIG. 22.

At block 1504, the example asset health calculator 300 selects a contract of interest to process. For example, the removal scheduler 420 can select the contract 1 2200 of FIG. 22 to process.

At block 1506, the example asset health calculator 300 processes maintenance facility information. For example, the removal scheduler 420 can obtain the maintenance facility information (e.g., a number of maintenance facilities, a number of personnel at the maintenance facilities, a current availability of the maintenance facilities, etc.) from the database 345.

At block 1508, the example asset health calculator 300 processes customer operational constraint information. For example, the removal scheduler 420 can obtain the customer operational constraint information (e.g., a number of assets the customer can remove from service during a specified time period, etc.) from the database 345.

At block 1510, the example asset health calculator 300 processes customer technical forecast information. For example, the removal scheduler 420 can obtain the customer technical forecast information (e.g., a time-on-wing metric, a number of flight cycles to be executed by the engine 102, etc.) from the database 345.

At block 1512, the example asset health calculator 300 processes customer spare part information. For example, the removal scheduler 420 can obtain the customer spare part information (e.g., a number of spares for the engine 102, the booster compressor 114, etc.) from the database 345.

At block 1514, the example asset health calculator 300 generates an actual removal schedule based on the processed information. For example, the removal scheduler 420 can generate an actual removal schedule for the assets corresponding to the contract 1 2200 of FIG. 22 based on the processed information (e.g., the maintenance facility information, the customer operational constraint information, etc.).

At block 1516, the example asset health calculator 300 determines whether to select another contract of interest to process. For example, the removal scheduler 420 can select the contract 2 2210 of FIG. 22 to process. If, at block 1516, the example asset health calculator 300 determines to select another contract of interest to process, control returns to block 1504 to select another contract of interest to process. If, at block 1516, the example asset health calculator 300 determines not to select another contract of interest to process, then, at block 1518, the asset health calculator 300 compares the actual removal schedules to the target removal schedules. For example, the removal scheduler 420 can compare the actual removal schedule for the assets corresponding to the contract 1 2200 to the target removal schedule for the assets corresponding to the contract 1 2200.

At block 1520, the example asset health calculator 300 determines whether the actual removal schedules are valid based on the comparison. For example, the removal scheduler 420 can determine whether a slot assignment of the assets corresponding to the contracts 2200, 2210, 2220, 2230 of FIG. 22 based on the actual removal schedules are not feasible, not valid, etc., (e.g., too many assets are assigned to the same maintenance facility at the same time, too many assets are removed during a specific time period, etc.).

If, at block 1520, the example asset health calculator 300 determines that the actual removal schedules are valid based on the comparison, control proceeds to block 1530 to generate the removal schedule based on the actual removal schedules. If, at block 1520, the example asset health calculator 300 determines that the actual removal schedules are not valid based on the comparison, then, at block 1522, the asset health calculator 300 identifies conflict contract(s). For example, the removal scheduler 420 can determine that the contract 2 2210 of FIG. 22 conflicts with the contract 1 2200 of FIG. 2 because one or more assets in the contract 2 2210 are in the same maintenance facility during a similar time period (e.g., a substantially similar time period, etc.) as one or more assets in the contract 1 2200 of FIG. 22.

At block 1524, the example asset health calculator 300 re-generates the removal schedule(s) corresponding to the conflict contract(s). For example, the removal scheduler 420 can re-generate the removal schedule for assets corresponding to contract 2 2210 of FIG. 22. For example, the removal scheduler 420 can determine that contract 2 2210 cannot be assigned or slotted according to the target removal schedule due to additional constraints (e.g., maintenance facility constraints, constraints due to contract 1 2200, etc.). The example removal scheduler 420 can re-generate the removal schedule for assets corresponding to contract 2 2210 to satisfy constraints corresponding to contract 2 2210 and the constraints set by the top (e.g., the maintenance facility, etc.).

At block 1526, the example asset health calculator 300 compares the re-generated conflict contract removal schedule(s) to the target removal schedules. For example, the removal scheduler 420 can compare the re-generated removal schedule for the contract 2 2210 of FIG. 22 to the target removal schedule for the contract 2 2210.

At block 1528, the example asset health calculator 300 determines whether the re-generated conflict contract removal schedule(s) are valid based on the comparison. For example, the removal scheduler 420 can determine that the contract 2 2210 of FIG. 22 is valid (e.g., the contract 2 2210 no longer conflicts with the contract 1 2200 of FIG. 22, etc.) based on the comparison.

If, at block 1528, the example asset health calculator 300 determines that the re-generated conflict contract removal schedule(s) are not valid based on the comparison, control returns to block 1522 to identify the conflict contracts. If, at block 1528, the example asset health calculator 300 determines that the re-generated conflict contract removal schedule(s) are valid based on the comparison, then, at block 1530, the asset health calculator 300 generates a removal schedule. For example, the removal scheduler 420 can generate the removal schedule based on determining that each of the removal schedules for the contracts 2200, 2210, 2220, 2230 of FIG. 22 are feasible, valid, etc. In response to generating the removal schedule, the example method returns to block 1310 of the example method of FIG. 13 to determine whether to generate the removal schedule using bottom-up optimization.

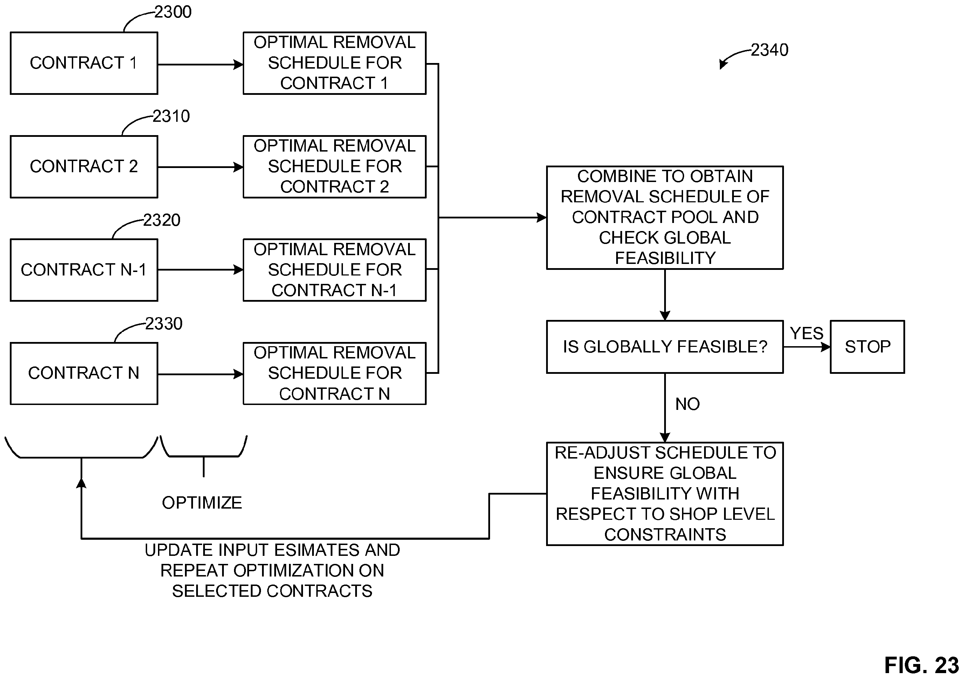

FIG. 16 is a flowchart representative of an example method that can be performed by the example asset health calculator 300 of FIGS. 3-4 to generate a removal schedule using bottom-up optimization. The example process of FIG. 16 can be used to implement the operation of block 1312 of FIG. 13. The example method begins at block 1602 at which the example asset health calculator 300 selects a contract of interest to process. For example, the removal scheduler 420 can select contract 1 2300 of FIG. 23 to process.

At blocks 1604-1610, the example asset health calculator 300 (e.g., the removal scheduler 420, etc.) processes information of interest similar (e.g., substantially similar) to the processes of blocks 1404-1410 of the example of FIG. 14. At block 1612, the example asset health calculator 300 generates a contract removal schedule based on the processed information. For example, the removal scheduler 420 can generate a removal schedule for the contract 1 2300 based on the processed information (e.g., the maintenance facility information, the customer spare part information, etc.).

At block 1614, the example asset health calculator 300 determines whether to select another contract of interest to process. For example, the removal scheduler 420 can select the contract 2 2310 of FIG. 23 to process. If, at block 1614, the example asset health calculator 300 determines to select another contract of interest to process, control returns to block 1602 to select another contract of interest to process. If, at block 1614, the example asset health calculator 300 determines not to select another contract of interest to process, then, at block 1616, the asset health calculator 300 generates a candidate overall removal schedule. For example, the removal scheduler 420 can generate an overall removal schedule including a removal schedule for the contract 1 2300, the contract 2 2310, the contract N-1 2320, the contract N 2330, etc., in which N corresponds to a total number of contracts to process.

At block 1618, the example asset health calculator 300 determines whether the candidate overall removal schedule is valid. For example, the removal scheduler 420 can determine that the candidate overall removal schedule is valid based on the candidate overall removal schedule satisfying customer requirements, maintenance facility constraints, etc.

If, at block 1618, the example asset health calculator 300 determines that the overall removal schedule is not valid, control returns to block 1602 to select another contract of interest to process (e.g., to re-adjust the removal schedule to help ensure global feasibility with respect to maintenance facility level constraints, etc.). If, at block 1618, the example asset health calculator 300 determines that the overall removal schedule is not valid, then, at block 1620, the asset health calculator 300 generates an overall removal schedule. For example, the removal scheduler 420 can generate an overall removal schedule including a removal schedule of assets corresponding to the contracts 2300, 2310, 2320, 2330 of FIG. 23. In response to generating the overall removal schedule, the example method returns to the example of FIG. 13 to return to block 1210 of the example of FIG. 12 to generate a revised optimization window value.

FIG. 17 is a schematic illustration of performing an iterated local search to generate a removal schedule for assets corresponding to a single contract. The example process of FIG. 11 can be used to implement the iterated local search as depicted in FIG. 17. For example, a removal schedule of the engines 1710, 1720, 1730 can be re-ordered to generate different solutions with corresponding different function costs. In the illustrated example of FIG. 17, the dark shaded boxes represent removal schedules corresponding to the engines that are being re-arranged when generating a different solution. For example, as depicted in FIG. 17, the removal scheduler 420 generates the neighbor 1 solution 1740 by swapping an order of the removal schedules for the engine 1 1710 (dark shaded) and the engine 2 1720 (dark shaded) while the engine 3 1730 is left unchanged (not dark shaded). In the illustrated example of FIG. 17, the removal scheduler 420 generates additional solutions such as a neighbor 2 solution 1750 and a neighbor 3 solution 1760 based on re-arranging the removal schedules for the engines 1710, 1720, 1730.

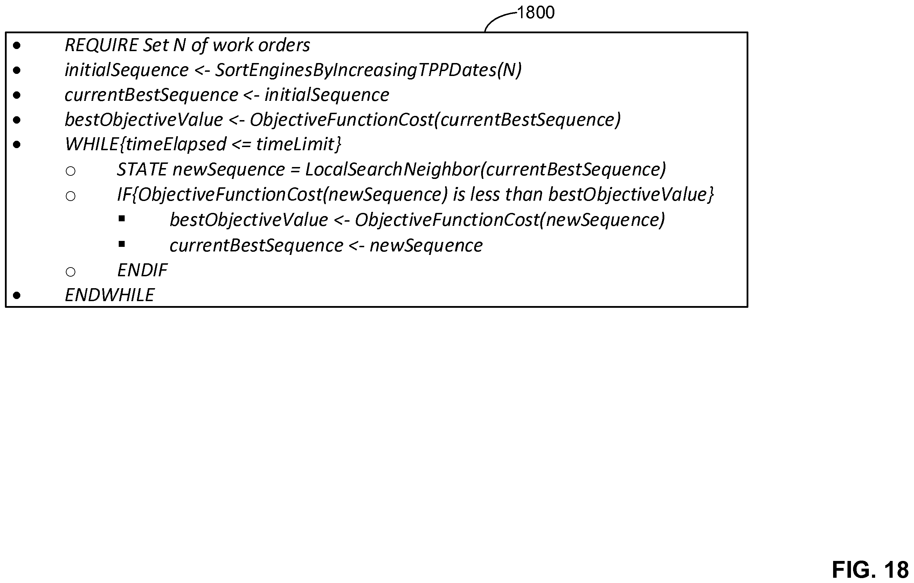

FIG. 18 depicts example source code 1800 representative of example computer readable instructions that can be executed to implement the example asset health calculator 300 of FIGS. 3-4 that can be used to implement the examples disclosed herein. For example, the source code 1800 can be used to implement the method of FIG. 11. In the illustrated example of FIG. 11, the asset health calculator 300 generates an initial sequence (e.g., an initial solution, etc.) of work orders to be performed and sets the initial sequence as the current best sequence. For example, the removal scheduler 420 can generate the initial sequence of work orders by sorting engines (e.g., assets, etc.) by increasing TPP dates. In the illustrated examples of FIG. 18, the asset health calculator 300 performs an iterated local search while time elapsed is less than or equal to a time limit threshold. For example, the removal scheduler 420 can optimize and/or otherwise improve a current best sequence (e.g., a removal schedule, etc.) to complete the work orders (e.g., to remove the engine 102 of FIG. 1 and perform a maintenance task on the engine 102, etc.) while an amount of time taken to process the source code 1800 is less than or equal to the time limit threshold (e.g., 100 milliseconds, 5 seconds, 2 minutes, etc.).

FIG. 19 is a schematic illustration of an example method of generating a removal schedule for assets corresponding to more than one contract by performing integer programming using a myopic optimization method, a rolling optimization method, etc. The schematic illustration of FIG. 19 can correspond to the example process of FIG. 12.

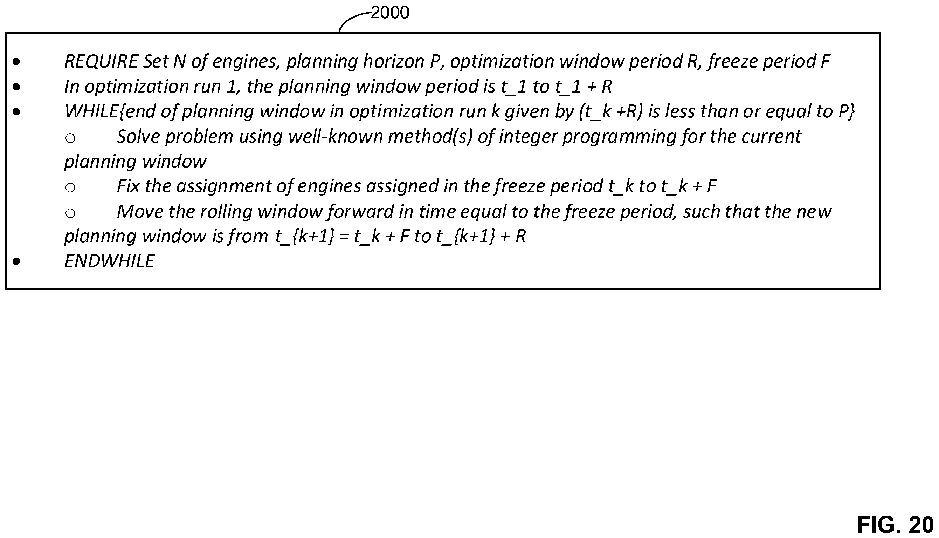

FIG. 20 depicts example source code 2000 representative of example computer readable instructions that can be executed to implement the example asset health calculator 300 of FIGS. 3-4 that can be used to implement the examples disclosed herein. For example, the source code 2000 can be used to implement the method of FIG. 12. In the illustrated example of FIG. 12, the asset health calculator 300 (e.g., the removal scheduler 420, etc.) generates an assignment of engines (e.g., a removal schedule, etc.) for a planning horizon P, an optimization window period R, and a freeze period F. The example source code 2000 is executed while the end of the planning window k given by (t_k + R) is less than or equal to P.

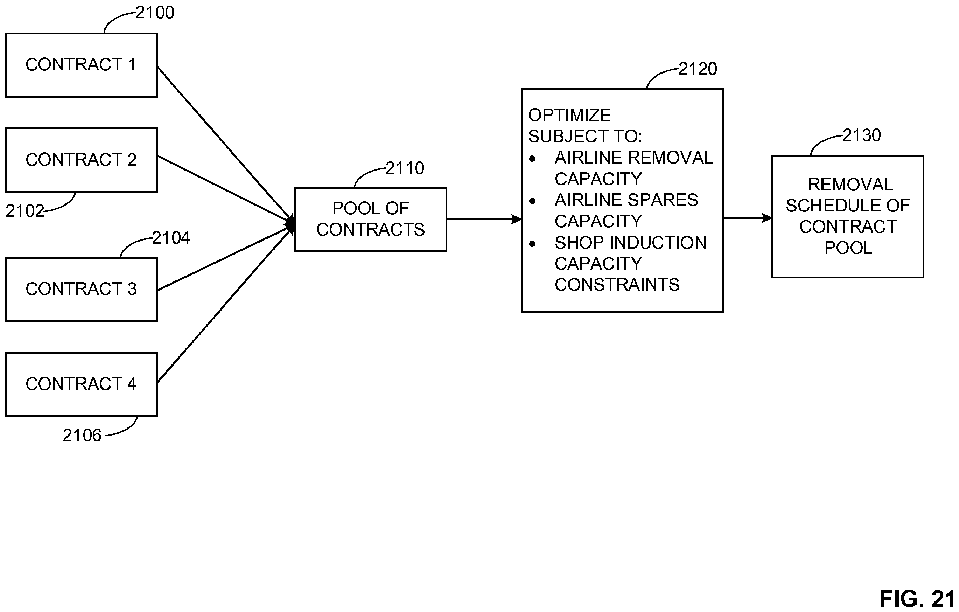

FIG. 21 is a schematic illustration of an example method of generating a removal schedule using single-level optimization. The example process of FIG. 14 can be used to implement the single level optimization process depicted in FIG. 21. In the illustrated example of FIG. 21, the asset health calculator 300 (e.g., the removal scheduler 420, etc.) pools the contracts 1-4 2100, 2102, 2104, 2106 into the pool of contracts 2110. In the illustrated example of FIG. 21, the asset health calculator 300 optimizes and/or otherwise improves a removal schedule corresponding to the pool of contracts 2110 based on airline removal capacity (e.g., customer operational constraint information, etc.), airlines spares capacity (e.g., customer spare part information, etc.), and shop induction capacity constraints (e.g., maintenance facility information, etc.). Additionally or alternatively, any other customer information, operator information, maintenance facility information, etc., can be used.

FIG. 22 is a schematic illustration of an example method of generating a removal schedule using top-down optimization. The example process of FIG. 15 can be used to implement the example top-down optimization process 2240 depicted in FIG. 22. In the illustrated example of FIG. 22, the asset health calculator 300 sets a target removal schedule for each of the contracts 1-4 2200, 2210, 2220, 2230 with respect to each of the other contracts 1-4 2200, 2210, 2220, 2230. For example, the removal scheduler 420 generates a slot order of the contracts 1-4 2200, 2210, 2220, 2230 using target information such as operating margin of the turbine engine maintenance provider, time-on-wing, and spare engine availability and constraint information such as spare engine availability, maintenance facility capacity, and contract information (e.g., terms and conditions, timelines, metrics, etc.). In the illustrated example of FIG. 22, the asset health calculator 300 assigns each of the contracts 2200, 2210, 2220, 2230 a target removal schedule based on the target information and the constraint information and then individually optimize and/or otherwise improve the target removal schedules.

For example, the removal scheduler 420 can generate a target removal schedule where the contracts 1-4 2200, 2210, 2220, 2230 do not conflict with each other based on estimating inputs such as maintenance facility information, customer operational constraint information, etc. In the illustrated example, the asset health calculator 300 optimizes and/or otherwise improves the target removal schedules by generating actual removal schedules based on information such as the maintenance facility information, the customer operational constraint information, etc.

In the illustrated example, the asset health calculator 300 determines whether an actual removal schedule corresponding to each individual contract is feasible, valid, etc., based on the target removal schedules. For example, the removal scheduler 420 can determine to combine the actual removal schedules to get an overall removal schedule for the contract pool (e.g., the contracts 1-4 2200, 2210, 2220, 2230, etc.) and stop the top-down optimization process 2240 of FIG. 22. In another example, the removal scheduler 420 can determine to identify a trade-off for a reduced set of contracts (e.g., contracts that are not feasible or valid, conflict with other contracts, etc.) and to update the removal schedules pertaining to the invalid contracts.

FIG. 23 is a schematic illustration of an example method of generating a removal schedule using bottom-up optimization. The example process of FIG. 16 can be used to implement the bottom-up optimization process 2340 depicted in FIG. 23. In the illustrated example of FIG. 23, the asset health calculator 300 generates a removal schedule (e.g., an optimal removal schedule, etc.) for each of the contracts 2300, 2310, 2320, 2330 depicted in FIG. 23. In the illustrated example, the asset health calculator 300 combines the removal schedules for each of the contracts 2300, 2310, 2320, 2330 to obtain a removal schedule of the contract pool and check for global feasibility. In the illustrated example, the asset health calculator 300 determines whether the removal schedule of the contract pool is globally feasible (e.g., the removal schedule is compatible with contract information, customer requirements, maintenance facility constraints, etc.). In the illustrated example, the asset health calculator 300 re-adjusts the contract pool removal schedule to ensure global feasibility with constraints such as customer constraints, maintenance facility constraints, etc. In the illustrated example, the asset health calculator 300 stops the bottom-up optimization process 2340 if the asset health calculator 300 determines that the contract pool removal schedule is globally feasible.

FIG. 24 is a block diagram of an example processor platform 2400 capable of executing the instructions of FIGS. 5-16, 18, and 20 to implement the asset health calculator 300 of FIGS. 3-4. The processor platform 2400 can be, for example, a server or any other type of computing device.

The processor platform 2400 of the illustrated example includes a processor 2412. The processor 2412 of the illustrated example is hardware. For example, the processor 2412 can be implemented by one or more integrated circuits, logic circuits, microprocessors or controllers from any desired family or manufacturer. The hardware processor may be a semiconductor based (e.g., silicon based) device. In this example, the processor 2412 implements the example collection engine 400, the example health quantifier generator 410, and the example removal scheduler 420.

The processor 2412 of the illustrated example includes a local memory 2413 (e.g., a cache). The processor 2412 of the illustrated example is in communication with a main memory including a volatile memory 2414 and a non-volatile memory 2416 via a bus 2418. The volatile memory 2414 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 2416 may be implemented by flash memory and/or any other desired type of memory device. Access to the main memory 2414, 2416 is controlled by a memory controller.

The processor platform 2400 of the illustrated example also includes an interface circuit 2420. The interface circuit 2420 may be implemented by any type of interface standard, such as an Ethernet interface, a universal serial bus (USB), and/or a peripheral component interconnect (PCI) express interface.

In the illustrated example, one or more input devices 2422 are connected to the interface circuit 2420. The input device(s) 2422 permit(s) a user to enter data and/or commands into the processor 2412. The input device(s) can be implemented by, for example, an audio sensor, a microphone, a camera (still or video), a keyboard, a button, a mouse, a touchscreen, a track-pad, a trackball, an isopoint device, and/or a voice recognition system.

One or more output devices 2424 are also connected to the interface circuit 2420 of the illustrated example. The output devices 2424 can be implemented, for example, by display devices (e.g., a light emitting diode (LED), an organic light emitting diode (OLED), a liquid crystal display, a cathode ray tube display (CRT), a touchscreen, a tactile output device, a printer and/or speakers). The interface circuit 2420 of the illustrated example, thus, typically includes a graphics driver card, a graphics driver chip and/or a graphics driver processor.

The interface circuit 2420 of the illustrated example also includes a communication device such as a transmitter, a receiver, a transceiver, a modem and/or network interface card to facilitate exchange of data with external machines (e.g., computing devices of any kind) via a network 2426 (e.g., an Ethernet connection, a digital subscriber line (DSL), a telephone line, coaxial cable, a cellular telephone system, etc.).

The processor platform 2400 of the illustrated example also includes one or more mass storage devices 2428 for storing software and/or data. Examples of such mass storage devices 2428 include floppy disk drives, hard drive disks, compact disk drives, Blu-ray disk drives, redundant array of independent disks (RAID) systems, and DVD drives. The coded instructions 2432 of FIGS. 5-16, 18, and 20 may be stored in the mass storage device 2428, in the volatile memory 2414, in the non-volatile memory 2416, and/or on a removable non-transitory computer readable storage medium such as a CD or DVD.

From the foregoing, it will be appreciated that example methods, apparatus, systems, and articles of manufacture have been disclosed that generate an asset health quantifier of a turbine engine. The above-disclosed asset health calculator apparatus estimates actual or current health states (e.g., actual AHQ, etc.) and forecasts projected health states (e.g., projected AHQ, etc.) of an asset such as a turbine engine by component and sub-component of the asset while in service with limited instrumentation using one or more models such as a digital twin model of the turbine engine. The example asset health calculator apparatus can optimize and/or otherwise improve a scheduling of removal of the asset from service to perform maintenance, refurbishment, service, etc., on the asset to meet customer requirements, maintenance capacity constraints, etc. The example asset health calculator apparatus can generate a removal schedule using one or more removal schedule determination or optimization processes and select one of the removal schedules based on satisfying customer requirements, maintenance facility constraints, etc. The example asset health calculator apparatus can optimize and/or otherwise improve a time-on-wing of the asset while minimizing cost and removal time and while yet achieving a post-repair mission based on forecast utilization information for the asset.

The example asset health calculator apparatus can obtain asset monitoring information corresponding to a turbine engine on-wing of an aircraft while in service. The example asset health calculator apparatus can generate (e.g., iteratively generate) an actual health state of the turbine engine based on generating actual health states of individual components of the turbine engine using one or more computer-generated models corresponding to the turbine engine. The example asset health calculator apparatus can identify that the turbine engine is a candidate for removal from service to perform maintenance on one or more components of the turbine engine based on a comparison of one or more of the actual health states to an actual health state threshold. The example asset health calculator apparatus can generate a removal schedule for the turbine engine by using different optimization processes and selecting a removal schedule based on satisfying operator requirements, operator constraints, turbine engine maintenance provider constraints, etc. A turbine engine maintenance provider can remove the turbine engine off-wing based on the removal schedule, perform the maintenance operation on the removed turbine engine, and re-deploy the turbine engine back to service where the example asset health calculator apparatus can resume monitoring the turbine engine while in service.

The example asset health calculator apparatus can improve a function, an operation, an efficiency, etc., of the turbine engine over the course of useful life of the turbine engine by more accurately determining an actual health state of the turbine engine. For example, by more accurately determining the actual health state, the asset health calculator apparatus can reduce a probability of premature removal of the turbine engine from service. By reducing the probability of premature removal, additional time can pass between maintenance facility visits which can allow new and improved asset components to be researched, designed, and tested that can improve an AHQ of the turbine engine. If the turbine engine is not prematurely removed from service, then, when the turbine engine is ready to be removed from service, newer components that can increase the AHQ of the turbine engine can be used to upgrade and/or otherwise improve an operation of the turbine engine over the course of useful life of the turbine engine.

Although certain example methods, apparatus, systems, and articles of manufacture have been disclosed herein, the scope of coverage of this patent is not limited thereto. On the contrary, this patent covers all methods, apparatus, systems, and articles of manufacture fairly falling within the scope of the claims of this patent.

Various aspects and embodiments of the present invention are defined by the following numbered clauses:
1. An apparatus comprising:
   a health quantifier generator to:
   execute a computer-generated model to:
   simulate an operating condition of a turbine engine using asset monitoring information;
   generate an asset health quantifier of the turbine engine based on the simulation; and
   compare the asset health quantifier to a threshold; and
   a removal scheduler to identify the turbine engine for removal from service based on the comparison to improve an operation of the turbine engine by performing a workscope on the removed turbine engine.
2. The apparatus of clause 1, wherein the health quantifier generator is to determine the asset health quantifier by:
   capturing a first image of the turbine engine using an imaging system;
   comparing the first image to a second image in a database using an object-recognition system; and
   determining the asset health quantifier when the first image matches the second image.
3. The apparatus of any preceding clause, wherein the asset monitoring information includes at least one of asset environmental information, asset sensor information, asset utilization information, asset configuration information, asset history information, or asset workscope quantifier information.
4. The apparatus of any preceding clause, wherein the computer-generated model includes at least one of a physics-based model, a stochastic model, a historical data model, or a hybrid model, the physics-based model corresponding to a digital twin model of the turbine engine.
5. The apparatus of any preceding clause, further including:
   a collection engine to obtain forecast information of the turbine engine; wherein:
   the health quantifier generator is to:
   execute the computer-generated model to generate a projected asset health quantifier by estimating the asset health quantifier using the forecast information;
   compare the projected asset health quantifier to the threshold; and
   identifying the turbine engine for removal from service based on the comparison.
6. The apparatus of any preceding clause, wherein the removal scheduler is to generate a removal schedule for one or more assets including the turbine engine by:
   identifying an initial removal schedule based on sorting the assets by a contract removal date;
   generating a first function cost of the initial removal schedule;
   generating a list of neighbor asset pairs;
   re-ordering a first neighbor asset pair in the list;
   generating a second function cost based on the re-ordering; and
   generating the removal schedule based on a comparison of the first function cost to the second function cost.
7. The apparatus of any preceding clause, wherein the removal scheduler is to generate the removal schedule by performing at least one of an integer programming method, a top-bottom optimization method, or a bottom-up optimization method.
8. A method comprising:
   executing a computer-generated model to:
   simulate an operating condition of an asset using asset monitoring information; and
   generate an asset health quantifier of the asset based on the simulation;
   comparing the asset health quantifier to a threshold; and
   identifying the asset for removal from service based on the comparison to improve an operation of the asset by performing a workscope on the removed asset.
9. The method of any preceding clause, wherein generating the asset health quantifier includes:
   capturing a first image of the asset using an imaging system;
   comparing the first image to a second image in a database using an object-recognition system; and
   determining the asset health quantifier when the first image matches the second image.
10. The method of any preceding clause, wherein the asset monitoring information includes at least one of asset environmental information, asset sensor information, asset utilization information, asset configuration information, asset history information, or asset workscope quantifier information.
11. The method of any preceding clause, wherein the computer-generated model includes at least one of a physics-based model, a stochastic model, a historical data model, or a hybrid model, the physics-based model corresponding to a digital twin model of the asset.
12. The method of any preceding clause, further including:
   obtaining forecast information of the asset;
   executing the computer-generated model to generate a
   projected asset health quantifier by estimating the asset health quantifier using the forecast information;
   comparing the projected asset health quantifier to the threshold; and
   identifying the asset for removal from service based on the comparison.
13. The method of any preceding clause, further including generating a removal schedule for one or more assets including the removed asset by:
   identifying an initial removal schedule based on sorting the assets by a contract removal date;
   generating a first function cost of the initial removal schedule;
   generating a list of neighbor asset pairs;
   re-ordering a first neighbor asset pair in the list;
   generating a second function cost based on the re-ordering; and
   generating the removal schedule based on a comparison of the first function cost to the second function cost.
14. The method of any preceding clause, wherein generating the removal schedule includes performing at least one of an integer programming method, a top-bottom optimization method, or a bottom-up optimization method.
15. A non-transitory computer readable storage medium comprising instructions which when executed, cause a machine to at least:
   execute a computer-generated model to:
   simulate an operating condition of an asset using asset monitoring information; and
   generate an asset health quantifier of the asset based on the simulation;
   compare the asset health quantifier to a threshold; and
   identify the asset for removal from service based on the comparison to improve an operation of the asset by performing a workscope on the removed asset.
16. The non-transitory computer readable storage medium of any preceding clause, wherein generating the asset health quantifier includes:
   capturing a first image of the asset using an imaging system;
   comparing the first image to a second image in a database using an object-recognition system; and
   determining the asset health quantifier when the first image matches the second image.
17. The non-transitory computer readable storage medium of any preceding clause, wherein the asset monitoring information includes at least one of asset environmental information, asset sensor information, asset utilization information, asset configuration information, asset history information, or asset workscope quantifier information.
18. The non-transitory computer readable storage medium of any preceding clause, wherein the computer-generated model includes at least one of a physics-based model, a stochastic model, a historical data model, or a hybrid model, the physics-based model corresponding to a digital twin model of the asset.
19. The non-transitory computer readable storage medium of any preceding clause, further including instructions which when executed, cause the machine to at least:
   obtain forecast information of the asset;
   execute the computer-generated model to generate a
   projected asset health quantifier by estimating the asset health quantifier using the forecast information;
   compare the projected asset health quantifier to the threshold; and
   identify the asset for removal from service based on the comparison.
20. The non-transitory computer readable storage medium of any preceding clause, further including instructions which when executed, cause the machine to at least generate a removal schedule for one or more assets including the removed asset by:
   identifying an initial removal schedule based on sorting the assets by a contract removal date;
   generating a first function cost of the initial removal schedule;
   generating a list of neighbor asset pairs;
   re-ordering a first neighbor asset pair in the list;
   generating a second function cost based on the re-ordering; and
   generating the removal schedule based on a comparison of the first function cost to the second function cost.
21. The non-transitory computer readable storage medium of any preceding clause, wherein generating the removal schedule includes performing at least one of an integer programming method, a top-bottom optimization method, or a bottom-up optimization method.

## Claims

1. An apparatus (300) comprising:
a health quantifier generator (410) to:
execute a computer-generated model (450, 452, 454, 456) to:
simulate an operating condition of a turbine engine (102) using asset monitoring information;
generate an asset health quantifier of the turbine engine (102) based on the simulation; and
compare the asset health quantifier to a threshold; and
a removal scheduler (420) to identify the turbine engine (102) for removal from service based on the comparison to improve an operation of the turbine engine (102) by performing a workscope on the removed turbine engine (102).

2. The apparatus (300) of claim 1, wherein the health quantifier generator (410) is to determine the asset health quantifier by:
capturing a first image of the turbine engine (102) using an imaging system;
comparing the first image to a second image in a database (345) using an object-recognition system; and
determining the asset health quantifier when the first image matches the second image.

3. The apparatus (300) of either of claim 1 or 2, wherein the asset monitoring information includes at least one of asset environmental information (432), asset sensor information (430), asset utilization information (434), asset configuration information (436), asset history information (438), or asset workscope quantifier information (440).

4. The apparatus (300) of any preceding claim, wherein the computer-generated model (450, 452, 454, 456) includes at least one of a physics-based model (452), a stochastic model (454), a historical data model (450), or a hybrid model (456), the physics-based model (452) corresponding to a digital twin model of the turbine engine (102).

5. The apparatus (300) of any preceding claim, further including:
a collection engine (400) to obtain forecast information of the turbine engine (102); wherein
the health quantifier generator (410) is to:
execute the computer-generated model (450, 452, 454, 456) to generate a projected asset health quantifier by estimating the asset health quantifier using the forecast information;
compare the projected asset health quantifier to the threshold; and
identifying the turbine engine (102) for removal from service based on the comparison.

6. The apparatus (300) of any preceding claim, wherein the removal scheduler (420) is to generate a removal schedule (1700, 1740, 1750, 1760) for one or more assets including the turbine engine (102) by:
identifying an initial removal schedule (1700) based on sorting the assets (1710, 1720, 1730) by a contract removal date;
generating a first function cost of the initial removal schedule (1700);
generating a list of neighbor asset pairs;
re-ordering a first neighbor asset pair in the list;
generating a second function cost based on the re-ordering; and
generating the removal schedule (1700, 1740, 1750, 1760) based on a comparison of the first function cost to the second function cost.

7. The apparatus (300) of claim 6, wherein the removal scheduler (420) is to generate the removal schedule (1700, 1740, 1750, 1760) by performing at least one of an integer programming method (2000), a top-bottom optimization method (2240), or a bottom-up optimization method (2340).

8. A method comprising:
executing a computer-generated model (450, 452, 454, 456) to:
simulate an operating condition of an asset (102) using asset monitoring information (506); and
generate an asset health quantifier of the asset (102) based on the simulation (506);
comparing the asset health quantifier to a threshold (514); and
identifying the asset (102) for removal from service based on the comparison to improve an operation of the asset (102) by performing a workscope on the removed asset (102) (516).

9. The method of claim 8, wherein generating the asset health quantifier includes:
capturing a first image of the asset (102) using an imaging system;
comparing the first image to a second image in a database (345) using an object-recognition system; and
determining the asset health quantifier when the first image matches the second image.

10. The method of either of claim 8 or 9, wherein the asset monitoring information includes at least one of asset environmental information (432), asset sensor information (430), asset utilization information (434), asset configuration information (436), asset history information (438), or asset workscope quantifier information (440).

11. The method of any of claims 8 to 10, wherein the computer-generated model (450, 452, 454, 456) includes at least one of a physics-based model (452), a stochastic model (454), a historical data model (450), or a hybrid model (456), the physics-based model (452) corresponding to a digital twin model of the asset (102).

12. The method of claims 8 to 11, further including:
obtaining forecast information of the asset (102) (504);
executing the computer-generated model (450, 452, 454, 456) to generate a projected asset health quantifier by estimating the asset health quantifier using the forecast information (508);
comparing the projected asset health quantifier to the threshold (514); and
identifying the asset (102) for removal from service based on the comparison (516).

13. The method of claim 12, further including generating a removal schedule (1700, 1740, 1750, 1760) for one or more assets including the removed asset (102) by:
identifying an initial removal schedule (1700) based on sorting the assets (1710, 1720, 1730) by a contract removal date (1102);
generating a first function cost of the initial removal schedule (1700) (1104);
generating a list of neighbor asset pairs (1108);
re-ordering a first neighbor asset pair in the list (1114);
generating a second function cost based on the re-ordering (1116); and
generating the removal schedule (1700, 1740, 1750, 1760) based on a comparison of the first function cost to the second function cost (1122).

14. The method of claim 13, wherein generating the removal schedule (1700, 1740, 1750, 1760) includes performing at least one of an integer programming method (2000), a top-bottom optimization method (2240), or a bottom-up optimization method (2340).

15. A non-transitory computer readable medium (2432) comprising instructions which, when executed, cause a machine (2400) to perform the method of any one of claims 8-14.
